(19) Europäisches Patentamt
European Patent Office
Office européen des brevets

(11) **EP 4 443 939 A1**

(12) **EUROPEAN PATENT APPLICATION**
published in accordance with Art. 153(4) EPC

(43) Date of publication:
**09.10.2024   Bulletin 2024/41**

(21) Application number: **22914912.5**

(22) Date of filing: **28.12.2022**

(51) International Patent Classification (IPC):
**H04W 24/02** (2009.01)

(52) Cooperative Patent Classification (CPC):
**H04W 24/02; H04W 24/06**

(86) International application number:
**PCT/CN2022/142804**

(87) International publication number:
**WO 2023/125660 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **29.12.2021   CN 202111642343**

(71) Applicant: **Huawei Technologies Co., Ltd.
Shenzhen, Guangdong 518129 (CN)**

(72) Inventors:
• **SUN, Yaqi
Shenzhen, Guangdong 518129 (CN)**
• **SUN, Yan
Shenzhen, Guangdong 518129 (CN)**
• **CHAI, Xiaomeng
Shenzhen, Guangdong 518129 (CN)**
• **WU, Yiqun
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54)   **COMMUNICATION METHOD AND DEVICE**

(57)   This disclosure provides a communication method and apparatus, to improve performance of a federated learning model. The method includes: obtaining an $i^{th}$ piece of first information, where the $i^{th}$ piece of first information indicates an $i^{th}$ local model of each of a plurality of subnodes, and i is a positive integer; determining an $i^{th}$ federated learning model of a $k^{th}$ subnode based on the $i^{th}$ piece of first information and a type of the $i^{th}$ federated learning model of the $k^{th}$ subnode, where k is any positive integer from 1 to K, and K is a quantity of the plurality of subnodes; and when i is greater than 1, the type of the $i^{th}$ federated learning model of the $k^{th}$ subnode is determined based on a type or performance of an $(i-1)^{th}$ federated learning model of the $k^{th}$ subnode; and sending an $i^{th}$ piece of second information, where the $i^{th}$ piece of second information indicates an $i^{th}$ federated learning model of each of the plurality of subnodes.

FIG. 7

EP 4 443 939 A1

**Description**

**CROSS-REFERENCE TO RELATED APPLICATIONS**

This application claims priority to Chinese Patent Application No. 202111642343.4, filed with the China National Intellectual Property Administration on December 29, 2021 and entitled "COMMUNICATION METHOD AND APPARATUS", which is incorporated herein by reference in its entirety.

**TECHNICAL FIELD**

This disclosure relates to the field of communication technologies, and in particular, to a communication method and apparatus.

**BACKGROUND**

In a wireless communication network, for example, in a mobile communication network, services supported by the network are increasingly diversified, and therefore requirements that need to be met are also increasingly diversified. For example, the network needs to support an ultra-high rate, ultra-low latency, and/or an ultra-large connection. These characteristics make network planning, network configuration, and/or resource scheduling more complex. In addition, because a network function is more powerful, for example, supporting an increasingly high spectrum and supporting new technologies such as a high-order multiple-input multiple-output (multiple-input multiple-output, MIMO) technology, beamforming, and/or beam management, network energy saving becomes a popular research topic. These new requirements, scenarios, and features bring unprecedented challenges to network planning, operation and maintenance, and efficient operation. To meet the challenge, an artificial intelligence technology may be introduced into the wireless communication network, to implement network intelligence. Based on this, how to effectively implement artificial intelligence in a network is a problem worth studying.

**SUMMARY**

This disclosure provides a communication method and apparatus, to improve performance of a federated learning model.

According to a first aspect, this disclosure provides a communication method, including: obtaining an $i^{th}$ piece of first information, where the $i^{th}$ piece of first information indicates an $i^{th}$ local model of each of a plurality of subnodes, and i is a positive integer; determining an $i^{th}$ federated learning model of a $k^{th}$ subnode based on the $i^{th}$ piece of first information and a type of the $i^{th}$ federated learning model of the $k^{th}$ subnode, where k is any positive integer from 1 to K, and K is a quantity of the plurality of subnodes; and when i is greater than 1, the type of the $i^{th}$ federated learning model of the $k^{th}$ subnode is determined based on a type or performance of an $(i-1)^{th}$ federated learning model of the $k^{th}$ subnode; and sending an $i^{th}$ piece of second information, where the $i^{th}$ piece of second information indicates an $i^{th}$ federated learning model of each of the plurality of subnodes.

In this design, performance or a type of a historical federated learning model is considered, and respective federated learning models are separately determined for subnodes participating in the federated learning model, to implement personalized federated learning. This helps improve performance of the federated learning model.

In a possible design, the $i^{th}$ federated learning model of the $k^{th}$ subnode is the same as or different from an $i^{th}$ federated learning model of at least one subnode other than the $k^{th}$ subnode in the plurality of subnodes. By using such a design, data distribution of a subnode can be matched, and different models are provided for a subnode whose data distribution is greatly different from that of another subnode, to implement personalized federated learning.

In a possible design, the type of the $i^{th}$ federated learning model of the $k^{th}$ subnode may be determined in the following manner: obtaining a first test result from the $k^{th}$ subnode, where the first test result indicates the performance of the $(i-1)^{th}$ federated learning model of the $k^{th}$ subnode, and i is greater than 1; and determining the type of the $i^{th}$ federated learning model of the $k^{th}$ subnode based on the first test result. In this design, a type of a current federated learning model is determined for a subnode with reference to performance of a historical federated learning model of the subnode, to help train a federated learning model that matches data distribution of the subnode.

In another possible design, the type of the $i^{th}$ federated learning model of the $k^{th}$ subnode may be determined in the following manner: sending, to the subnode with the $k^{th}$ order, information indicating a first model, where the first model is determined based on an $(i-1)^{th}$ piece of first information and a weight corresponding to an $(i-1)^{th}$ local model of each of the plurality of subnodes, and i is greater than 1; obtaining a second test result from the $k^{th}$ subnode, where the second test result indicates performance of the first model, or the second test result indicates performance of the first model and the performance of the $(i-1)^{th}$ federated learning model of the $k^{th}$ subnode; and determining the type of the

i<sup>th</sup> federated learning model of the k<sup>th</sup> subnode based on the second test result. In this design, a type of a current federated learning model is determined with reference to the first model, namely, the historical federated learning model of a global type, to help train a federated learning model that matches data distribution of the subnode.

In a possible design, the determining an i<sup>th</sup> federated learning model of a k<sup>th</sup> subnode based on the i<sup>th</sup> piece of first information and a type of the i<sup>th</sup> federated learning model of the k<sup>th</sup> subnode includes: when the type of the i<sup>th</sup> federated learning model of the k<sup>th</sup> subnode corresponds to a first value, determining the i<sup>th</sup> federated learning model of the k<sup>th</sup> subnode based on the i<sup>th</sup> piece of first information and a weight corresponding to the i<sup>th</sup> local model of each of the plurality of subnodes; or when the type of the i<sup>th</sup> federated learning model of the k<sup>th</sup> subnode corresponds to a second value, determining the i<sup>th</sup> federated learning model of the k<sup>th</sup> subnode based on the i<sup>th</sup> piece of first information and a similarity between the i<sup>th</sup> local model of the k<sup>th</sup> subnode and the i<sup>th</sup> local model of each of the plurality of subnodes. In this design, different model calculation manners are used for different types of federated learning models to determine a federated learning model of a related subnode, so that performance of the federated learning model can be improved.

In a possible design, the plurality of subnodes include a first group of subnodes and a second group of subnodes, i<sup>th</sup> federated learning models of all subnodes in the first group of subnodes are the same, and i<sup>th</sup> federated learning models of all subnodes in the second group of subnodes are different and are different from the i<sup>th</sup> federated learning models of all the subnodes in the first group of subnodes; and the sending an i<sup>th</sup> piece of second information includes: sending first indication information to the first group of subnodes in a broadcast or multicast manner, where the first indication information indicates the i<sup>th</sup> federated learning model of each subnode in the first group of subnodes; and sending second indication information to a p<sup>th</sup> subnode in the second group of subnodes in a unicast manner, where the second indication information indicates an i<sup>th</sup> federated learning model of the p<sup>th</sup> subnode, p is any positive integer from 1 to P, and P is a quantity of subnodes included in the second group of subnodes.

In another possible design, the i<sup>th</sup> federated learning model is represented by a first part of parameter information and a second part of parameter information, and first parts of parameter information of i<sup>th</sup> federated learning models of all of the plurality of subnodes are the same; the plurality of subnodes include a first group of subnodes and a second group of subnodes, second parts of parameter information of i<sup>th</sup> federated learning models of all subnodes in the first group of subnodes are the same, and second parts of parameter information of i<sup>th</sup> federated learning models of all subnodes in the second group of subnodes are different and are different from the second parts of parameter information of the i<sup>th</sup> federated learning models of all the subnodes in the first group of subnodes; and
the sending an i<sup>th</sup> piece of second information includes: sending the first part of parameter information of the i<sup>th</sup> federated learning model to the plurality of subnodes in a broadcast or multicast manner; sending the second part of parameter information of the i<sup>th</sup> federated learning model of each subnode in the first group of subnodes to the first group of subnodes in a broadcast or multicast manner; and sending a second part of parameter information of an i<sup>th</sup> federated learning model of a p<sup>th</sup> subnode to the p<sup>th</sup> subnode in the second group of subnodes in a unicast manner, where p is any positive integer from 1 to P, and P is a quantity of subnodes included in the second group of subnodes.

In the foregoing design of sending the i<sup>th</sup> piece of second information, same information corresponding to two or more subnodes is sent in a broadcast or multicast manner, so that a resource for sending the i<sup>th</sup> piece of second information can be saved.

In a possible design, the method further includes: sending, to the plurality of subnodes, information indicating a second model, where the information indicating the second model is used by each of the plurality of subnodes to determine a 1<sup>st</sup> local model.

According to a second aspect, this disclosure provides a communication method, including: sending information indicating an i<sup>th</sup> local model of a k<sup>th</sup> subnode, where k is any positive integer from 1 to K, K is a quantity of a plurality of subnodes participating in federated learning, and i is a positive integer; and obtaining information indicating an i<sup>th</sup> federated learning model of the k<sup>th</sup> subnode, where the i<sup>th</sup> federated learning model of the k<sup>th</sup> subnode is determined based on an i<sup>th</sup> piece of first information and a type of the i<sup>th</sup> federated learning model of the k<sup>th</sup> subnode. The i<sup>th</sup> piece of first information includes information indicating an i<sup>th</sup> local model of each of the plurality of subnodes; and when i is greater than 1, the type of the i<sup>th</sup> federated learning model of the k<sup>th</sup> subnode is determined based on a type or performance of an (i-1)<sup>th</sup> federated learning model of the k<sup>th</sup> subnode.

In a possible design, the i<sup>th</sup> federated learning model of the k<sup>th</sup> subnode is the same as or different from an i<sup>th</sup> federated learning model of at least one subnode other than the k<sup>th</sup> subnode in the plurality of subnodes.

In a possible design, the method further includes: sending a first test result, where the first test result indicates the performance of the (i-1)<sup>th</sup> federated learning model of the k<sup>th</sup> subnode, i is greater than 1, and the type of the i<sup>th</sup> federated learning model of the k<sup>th</sup> subnode is determined based on the first test result.

In a possible design, the method further includes: obtaining information indicating a first model, where the first model is determined based on an (i-1)<sup>th</sup> piece of first information and a weight corresponding to an (i-1)<sup>th</sup> local model of each of the plurality of subnodes, and i is greater than 1; and sending a second test result, where the second test result indicates performance of the first model, or the second test result indicates performance of the first model and the performance of the (i-1)<sup>th</sup> federated learning model of the k<sup>th</sup> subnode, and the type of the i<sup>th</sup> federated learning model

of the $k^{th}$ subnode is determined based on the second test result.

In a possible design, when the type of the $i^{th}$ federated learning model of the $k^{th}$ subnode corresponds to a first value, the $i^{th}$ federated learning model of the $k^{th}$ subnode is determined based on the $i^{th}$ piece of first information and a weight corresponding to the $i^{th}$ local model of each of the plurality of subnodes; or when the type of the $i^{th}$ federated learning model of the $k^{th}$ subnode corresponds to a second value, the $i^{th}$ federated learning model of the $k^{th}$ subnode is determined based on the $i^{th}$ piece of first information and a similarity between the $i^{th}$ local model of the $k^{th}$ subnode and the $i^{th}$ local model of each of the plurality of subnodes.

In a possible design, the method further includes: obtaining information indicating a second model; and determining a $1^{st}$ local model of the $k^{th}$ subnode based on the information indicating the second model.

According to a third aspect, this disclosure provides a communication apparatus. The communication apparatus may be a central node, or may be an apparatus in a central node, or may be an apparatus that can be used together with a central node. In a design, the communication apparatus may include modules that one-to-one correspond to the method/operation/step/action according to the first aspect. The modules may be implemented by a hardware circuit, software, or a combination of the hardware circuit and software. In a design, the communication apparatus may include a processing module and a communication module.

In an example, the communication module is configured to obtain an $i^{th}$ piece of first information, where the $i^{th}$ piece of first information indicates an $i^{th}$ local model of each of a plurality of subnodes, and i is a positive integer.

The processing module is configured to determine an $i^{th}$ federated learning model of a $k^{th}$ subnode based on the $i^{th}$ piece of first information and a type of the $i^{th}$ federated learning model of the $k^{th}$ subnode, where k is any positive integer from 1 to K, and K is a quantity of the plurality of subnodes; and when i is greater than 1, the type of the $i^{th}$ federated learning model of the $k^{th}$ subnode is determined based on a type or performance of an $(i-1)^{th}$ federated learning model of the $k^{th}$ subnode.

The communication module is further configured to send an $i^{th}$ piece of second information, where the $i^{th}$ piece of second information indicates an $i^{th}$ federated learning model of each of the plurality of subnodes.

In a possible design, the $i^{th}$ federated learning model of the $k^{th}$ subnode is the same as or different from an $i^{th}$ federated learning model of at least one subnode other than the $k^{th}$ subnode in the plurality of subnodes.

In a possible design, the communication module is further configured to obtain a first test result from the $k^{th}$ subnode, where the first test result indicates the performance of the $(i-1)^{th}$ federated learning model of the $k^{th}$ subnode, and i is greater than 1; and the processing module is further configured to determine the type of the $i^{th}$ federated learning model of the $k^{th}$ subnode based on the first test result.

In another possible design, the communication module is further configured to send, to the subnode with the $k^{th}$ order, information indicating a first model, where the first model is determined based on an $(i-1)^{th}$ piece of first information and a weight corresponding to an $(i-1)^{th}$ local model of each of the plurality of subnodes, and i is greater than 1. The communication module is further configured to obtain a second test result from the $k^{th}$ subnode; where the second test result indicates performance of the first model, or the second test result indicates performance of the first model and the performance of the $(i-1)^{th}$ federated learning model of the $k^{th}$ subnode. The processing module is further configured to determine the type of the $i^{th}$ federated learning model of the $k^{th}$ subnode based on the second test result.

In a possible design, the processing module is further configured to: when the type of the $i^{th}$ federated learning model of the $k^{th}$ subnode corresponds to a first value, determine the $i^{th}$ federated learning model of the $k^{th}$ subnode based on the $i^{th}$ piece of first information and a weight corresponding to the $i^{th}$ local model of each of the plurality of subnodes; or when the type of the $i^{th}$ federated learning model of the $k^{th}$ subnode corresponds to a second value, determine the $i^{th}$ federated learning model of the $k^{th}$ subnode based on the $i^{th}$ piece of first information and a similarity between an $i^{th}$ local model of the $k^{th}$ subnode and the $i^{th}$ local model of each of the plurality of subnodes.

In a possible design, the plurality of subnodes include a first group of subnodes and a second group of subnodes, $i^{th}$ federated learning models of all subnodes in the first group of subnodes are the same, and $i^{th}$ federated learning models of all subnodes in the second group of subnodes are different and are different from the $i^{th}$ federated learning models of all the subnodes in the first group of subnodes. The communication module is further configured to: send first indication information to the first group of subnodes in a broadcast or multicast manner, where the first indication information indicates the $i^{th}$ federated learning model of each subnode in the first group of subnodes; and send second indication information to a $p^{th}$ subnode in the second group of subnodes in a unicast manner, where the second indication information indicates an $i^{th}$ federated learning model of the $p^{th}$ subnode, p is any positive integer from 1 to P, and P is a quantity of subnodes included in the second group of subnodes.

In another possible design, the $i^{th}$ federated learning model is represented by a first part of parameter information and a second part of parameter information, and first parts of parameter information of $i^{th}$ federated learning models of all of the plurality of subnodes are the same; and the plurality of subnodes include a first group of subnodes and a second group of subnodes, second parts of parameter information of $i^{th}$ federated learning models of all subnodes in the first group of subnodes are the same, and second parts of parameter information of $i^{th}$ federated learning models of all subnodes in the second group of subnodes are different and are different from the second parts of parameter information of the $i^{th}$ federated learning models of all the subnodes in the first group of subnodes; and

the communication module is further configured to: send the first part of parameter information of the $i^{th}$ federated learning model to the plurality of subnodes in a broadcast or multicast manner; send the second part of parameter information of the $i^{th}$ federated learning model of each subnode in the first group of subnodes to the first group of subnodes in a broadcast or multicast manner; and send a second part of parameter information of an $i^{th}$ federated learning model of a $p^{th}$ subnode to the $p^{th}$ subnode in the second group of subnodes in a unicast manner, where p is any positive integer from 1 to P, and P is a quantity of subnodes included in the second group of subnodes.

In a possible design, the communication module is further configured to send, to the plurality of subnodes, information indicating a second model, where the information indicating the second model is used by each of the plurality of subnodes to determine a 1st local model.

According to a fourth aspect, this disclosure provides a communication apparatus. The communication apparatus may be a $k^{th}$ subnode, or may be an apparatus in a $k^{th}$ subnode, or may be an apparatus that can be used together with a $k^{th}$ subnode. In a design, the communication apparatus may include modules that one-to-one correspond to the method/operation/step/action according to the first aspect. The modules may be implemented by a hardware circuit, software, or a combination of the hardware circuit and software. In a design, the communication apparatus may include a processing module and a communication module.

In an example, the processing module is configured to send, by using the communication module, information indicating an $i^{th}$ local model of the $k^{th}$ subnode, where k is any positive integer from 1 to K, K is a quantity of a plurality of subnodes participating in federated learning, and i is a positive integer; and the communication module is further configured to obtain information indicating an $i^{th}$ federated learning model of the $k^{th}$ subnode, where the $i^{th}$ federated learning model of the $k^{th}$ subnode is determined based on an $i^{th}$ piece of first information and a type of the $i^{th}$ federated learning model of the $k^{th}$ subnode. The $i^{th}$ piece of first information includes information indicating an $i^{th}$ local model of each of the plurality of subnodes; and when i is greater than 1, the type of the $i^{th}$ federated learning model of the $k^{th}$ subnode is determined based on a type or performance of an $(i-1)^{th}$ federated learning model of the $k^{th}$ subnode.

In a possible design, the $i^{th}$ federated learning model of the $k^{th}$ subnode is the same as or different from an $i^{th}$ federated learning model of at least one subnode other than the $k^{th}$ subnode in the plurality of subnodes.

In a possible design, the processing module is further configured to send a first test result by using the communication module, where the first test result indicates the performance of the $(i-1)^{th}$ federated learning model of the $k^{th}$ subnode, i is greater than 1, and the type of the $i^{th}$ federated learning model of the $k^{th}$ subnode is determined based on the first test result.

In a possible design, the communication module is further configured to obtain information indicating a first model, where the first model is determined based on an $(i-1)^{th}$ piece of first information and a weight corresponding to an $(i-1)^{th}$ local model of each of the plurality of subnodes, and i is greater than 1; and the processing module is further configured to send a second test result by using the communication module, where the second test result indicates performance of the first model, or the second test result indicates performance of the first model and the performance of the $(i-1)^{th}$ federated learning model of the $k^{th}$ subnode, and the type of the $i^{th}$ federated learning model of the $k^{th}$ subnode is determined based on the second test result.

For content description of the type of the $i^{th}$ federated learning model of the $k^{th}$ subnode, refer to the second aspect. Details are not described herein again.

In a possible design, the communication module is further configured to obtain information indicating a second model; and the processing module is further configured to determine a 1st local model of the $k^{th}$ subnode based on the information indicating the second model.

In a possible design of any one of the first aspect to the fourth aspect, $1 \leq i \leq I$, I is a positive integer, an $I^{th}$ federated learning model of the $k^{th}$ subnode meets a model convergence condition, and when i is greater than 1, the $i^{th}$ local model of the $k^{th}$ subnode is determined based on the $(i-1)^{th}$ federated learning model of the $k^{th}$ subnode.

According to a fifth aspect, this disclosure provides a communication apparatus. The communication apparatus includes a processor, configured to implement the method according to the first aspect. The communication apparatus may further include a memory, configured to store instructions and data. The memory is coupled to the processor. When executing the instructions stored in the memory, the processor can implement the method according to the first aspect. The communication apparatus may further include a communication interface. The communication interface is used by the apparatus to communicate with another device. For example, the communication interface may be a transceiver, a circuit, a bus, a module, a pin, or another type of communication interface. In a possible device, the communication apparatus includes:

a memory, configured to store program instructions; and

a processor, configured to obtain an $i^{th}$ piece of first information through the communication interface, where the $i^{th}$ piece of first information indicates an $i^{th}$ local model of each of a plurality of subnodes, and i is a positive integer, where the processor is further configured to determine an $i^{th}$ federated learning model of a $k^{th}$ subnode based on the $i^{th}$

piece of first information and a type of the $i^{th}$ federated learning model of the $k^{th}$ subnode, where k is any positive integer from 1 to K, and K is a quantity of the plurality of subnodes; and when i is greater than 1, the type of the $i^{th}$ federated learning model of the $k^{th}$ subnode is determined based on a type or performance of an $(i-1)^{th}$ federated learning model of the $k^{th}$ subnode; and

the processor is further configured to send an $i^{th}$ piece of second information through the communication interface, where the $i^{th}$ piece of second information indicates an $i^{th}$ federated learning model of each of the plurality of subnodes.

According to a sixth aspect, this disclosure provides a communication apparatus. The communication apparatus includes a processor, configured to implement the method according to the second aspect. The communication apparatus may further include a memory, configured to store instructions and data. The memory is coupled to the processor. When executing the instructions stored in the memory, the processor can implement the method according to the second aspect. The communication apparatus may further include a communication interface. The communication interface is used by the apparatus to communicate with another device. For example, the communication interface may be a transceiver, a circuit, a bus, a module, a pin, or another type of communication interface. In a possible device, the communication apparatus includes:

a memory, configured to store program instructions; and
a processor, configured to send, through the communication interface, information indicating an $i^{th}$ local model of a $k^{th}$ subnode, where k is any positive integer from 1 to K, K is a quantity of a plurality of subnodes participating in federated learning, and i is a positive integer, where
the processor is further configured to obtain, through the communication interface, information indicating an $i^{th}$ federated learning model of the $k^{th}$ subnode, and the $i^{th}$ federated learning model of the $k^{th}$ subnode is determined based on an $i^{th}$ piece of first information and a type of the $i^{th}$ federated learning model of the $k^{th}$ subnode. The $i^{th}$ piece of first information includes information indicating an $i^{th}$ local model of each of the plurality of subnodes; and when i is greater than 1, the type of the $i^{th}$ federated learning model of the $k^{th}$ subnode is determined based on a type or performance of an $(i-1)^{th}$ federated learning model of the $k^{th}$ subnode.

According to a seventh aspect, this disclosure provides a communication system, including the communication apparatus according to the third aspect or the fifth aspect, and the communication apparatus according to the fourth aspect or the sixth aspect.
According to an eighth aspect, this disclosure further provides a computer program. When the computer program is run on a computer, the computer is enabled to perform the method according to the first aspect or the second aspect.
According to a ninth aspect, this disclosure further provides a computer program product, including instructions. When the instructions are run on a computer, the computer is enabled to perform the method according to the first aspect or the second aspect.
According to a tenth aspect, this disclosure further provides a computer-readable storage medium, where the computer-readable storage medium stores a computer program or instructions, and when the computer program or the instructions is/are run on a computer, the computer is enabled to perform the method according to the first aspect or the second aspect.
According to an eleventh aspect, this disclosure further provides a chip. The chip is configured to read a computer program stored in a memory, to perform the method according to the first aspect or the second aspect.
According to a twelfth aspect, this disclosure further provides a chip system. The chip system includes a processor, configured to support a computer apparatus in implementing the method according to the first aspect or the second aspect. In a possible design, the chip system further includes a memory, and the memory is configured to store a program and data that are necessary for the computer apparatus. The chip system may include a chip, or may include a chip and another discrete device.

## BRIEF DESCRIPTION OF DRAWINGS

FIG. 1A is a diagram of a structure of a communication system;
FIG. 1B is a diagram of a structure of a communication system;
FIG. 2A is a diagram of a neuron structure;
FIG. 2B is a diagram of a layer relationship of a neural network;
FIG. 3A is a diagram of a network structure corresponding to a communication method according to this disclosure;
FIG. 3B is a diagram of a network structure corresponding to a communication method according to this disclosure;
FIG. 4A is a diagram of node interaction in a related federated learning technology;

FIG. 4B is a diagram of node interaction for training a federated learning model according to this disclosure;
FIG. 5 is a schematic flowchart of a communication method according to this disclosure;
FIG. 6 is a diagram of model structure division;
FIG. 7 is a schematic flowchart of a communication method according to this disclosure;
FIG. 8A is a schematic flowchart of a method for determining a model type according to this disclosure;
FIG. 8B is a schematic flowchart of a method for determining a model type according to this disclosure;
FIG. 9 is a schematic flowchart of a communication method according to this disclosure;
FIG. 10A is a schematic flowchart of a method for determining a model type according to this disclosure;
FIG. 10B is a schematic flowchart of a method for determining a model type according to this disclosure;
FIG. 11 is a schematic flowchart of a communication method according to this disclosure;
FIG. 12 is a diagram of a structure of a communication apparatus according to this disclosure; and
FIG. 13 is a diagram of a structure of a communication apparatus according to this disclosure.

## DESCRIPTION OF EMBODIMENTS

To make objectives, technical solutions, and advantages of this disclosure clearer, the following further describes this disclosure in detail with reference to accompanying drawings.

"At least one" of the following in this disclosure indicates one or more. "A plurality of" means two or more than two. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects. In addition, it should be understood that although the terms such as "first" and "second" may be used in disclosure to describe objects, these objects should not be limited by these terms. These terms are only used to distinguish the objects from each other.

Terms "including", "having", and any other variant thereof mentioned in the following descriptions of this disclosure are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that, in this disclosure, terms such as "an example" or "for example" are used to represent giving an example, an illustration, or a description. Any method or design scheme described as an "example" or "for example" in this disclosure should not be explained as being more preferred or having more advantages than another method or design scheme. Exactly, use of the terms such as "example", "for example", or the like is intended to present a related concept in a specific manner.

The technologies provided in this disclosure may be applied to various communication systems. For example, the communication system may be a $3^{rd}$ generation ($3^{rd}$ generation, 3G) communication system (for example, a universal mobile telecommunications system (universal mobile telecommunications system, UMTS)), a $4^{th}$ generation ($4^{th}$ generation, 4G) communication system (for example, a long term evolution (long term evolution, LTE) system), a $5^{th}$ generation ($5^{th}$ generation, 5G) communication system, a worldwide interoperability for microwave access (worldwide interoperability for microwave access, WiMAX) or a wireless local area network (wireless local area network, WLAN) system, or a system integrating a plurality of systems, or a future communication system, for example, a 6G communication system. The 5G communication system may also be referred to as a new radio (new radio, NR) system.

A network element in a communication system may send a signal to another network element or receive a signal from another network element. The signal may include information, configuration information, data, or the like. The network element may also be referred to as an entity, a network entity, a device, a communication device, a communication module, a node, a communication node, or the like. In this disclosure, the network element is used as an example for description. For example, the communication system may include at least one terminal device and at least one access network device. A sending network element of the configuration information may be an access network device, and a receiving network element of the configuration information may be a terminal device. In addition, it may be understood that, if the communication system includes a plurality of terminal devices, the plurality of terminal devices may also send signals to each other, that is, both a sending network element of the configuration information and a receiving network element of the configuration information may be terminal devices.

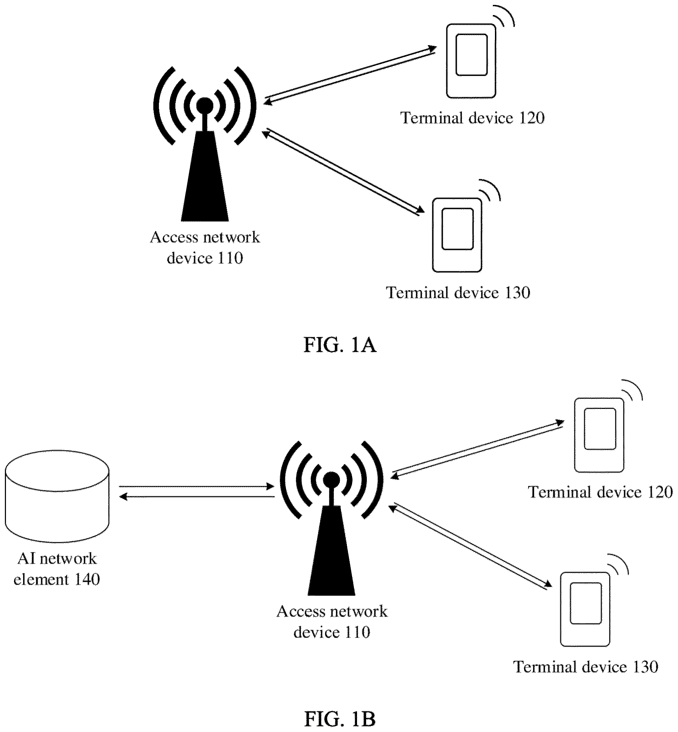

FIG. 1A shows a communication system. For example, the communication system includes an access network device 110 and two terminal devices, namely, a terminal device 120 and a terminal device 130. At least one of the terminal device 120 and the terminal device 130 may send uplink data to the access network device 110, and the access network device 110 may receive the uplink data. The access network device may send downlink data to the at least one of the terminal device 120 and the terminal device 130.

The following describes in detail the terminal device and the access network device in FIG. 1A.

(1) Access network device

The access network device may be a base station (base station, BS), and the access network device may also be referred to as a network device, an access node (access node, AN), or a radio access node (radio access node, RAN). The access network device may be connected to a core network (for example, an LTE core network or a 5G core network), and the access network device may provide a radio access service for the terminal device. For example, the access network device includes but is not limited to at least one of a base station, a next generation NodeB (generation NodeB, gNB) in 5G, an access network device in an open radio access network (open radio access network, O-RAN), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), a transmission reception point (transmission reception point, TRP), a transmission point (transmission point, TP), and/or a mobile switching center. Alternatively, the access network device may be a central unit (central unit, CU), a distributed unit (distributed unit, DU), a central unit control plane (CU control plane, CU-CP) node, or a central unit user plane (CU user plane, CU-UP) node. Alternatively, the access network device may be a relay station, an access point, a vehicle-mounted device, a wearable device, an access network device in a future evolved public land mobile network (public land mobile network, PLMN), or the like.

In this disclosure, a communication apparatus configured to implement a function of the access network device may be an access network device, or may be a network device having some functions of the access network device, or may be an apparatus that can support the access network device in implementing the function, for example, a chip system, a hardware circuit, a software module, or a hardware circuit and a software module. The apparatus may be installed in the access network device. In this disclosure, an example in which the communication apparatus configured to implement the function of the access network device is the access network device is used for description.

(2) Terminal device

The terminal device is also referred to as a terminal, user equipment (user equipment, UE), a mobile station (mobile station, MS), a mobile terminal (mobile terminal, MT), or the like, and is a device that provides voice and/or data connectivity for a user. The terminal device may communicate with one or more core networks via an access network device. The terminal device includes a handheld device with a wireless connection function, or another processing device, a vehicle-mounted device, or the like connected to a wireless modem. Alternatively, the terminal device may be a portable, pocket-sized, handheld, computer built-in, or vehicle-mounted mobile apparatus. Examples of some terminal devices are: a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a notebook computer, a palmtop computer, a mobile internet device (mobile internet device, MID), a wearable device, for example, a smart watch, a virtual reality (virtual reality, VR) device, an augmented reality (augmented reality, AR) device, and a wireless terminal in industrial control (industrial control), a terminal in an internet of vehicles system, a wireless terminal in a self driving (self driving), a wireless terminal in a smart grid (smart grid), a wireless terminal in transportation security (transportation safety), a wireless terminal in a smart city (smart city), for example, a smart fueler, a terminal device on a high-speed train, or a wireless terminal in a smart home (smart home), for example, a smart stereo, a smart coffee machine, or a smart printer.

In this disclosure, the communication apparatus configured to implement a function of the terminal device may be a terminal device, or may be a terminal device that has some functions of a terminal, or may be an apparatus that can support the terminal device in implementing the function, for example, a chip system. The apparatus may be installed in the terminal device. In this disclosure, the chip system may include a chip, or may include a chip and another discrete device. In the technical solutions provided in this disclosure, an example in which the communication apparatus configured to implement the function of the terminal device is the terminal device or UE is used for description.

(3) Protocol layer structure between an access network device and a terminal device

Communication between the access network device and the terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, used to transmit data related to an AI function.

Data transmission between the access network device and the terminal device is used as an example. Data need to be transmitted through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes transmit or receive direction, each layer is further divided into a transmit part and a receive part. Downlink data transmission is used as an example. After obtaining data from an upper layer, the PDCP layer transmits the data to the RLC layer and the MAC layer, the MAC layer generates a transport block, and then wireless transmission is performed through the physical layer. Data is encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used to provide a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be configured to forward user data. For example, the non-access stratum forwards uplink data received from the application layer to the SDAP layer, or forwards downlink data received from the SDAP layer to the application layer.

(4) Structure of an access network device

The access network device may include a central unit (central unit, CU) and a distributed unit (distributed unit, DU). A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. The CU and the DU may be divided based on protocol layers of the radio network. For example, functions of the PDCP layer and protocol layers above the PDCP layer are set on the CU, and functions of protocol layers below the PDCP layer (for example, the RLC layer and the MAC layer) are set on the DU. For another example, functions of protocol layers above the PDCP layer are set on the CU, and functions of the PDCP layer and protocol layers below the PDCP layer are set on the DU.

It may be understood that processing function division of the CU and the DU based on the protocol layers is only an example, and there may be other division. For example, the CU or the DU may be divided into functions having more protocol layers. For another example, the CU or the DU may be further divided into some processing functions having protocol layers. In a design, some functions of the RLC layer and functions of protocol layers above the RLC layer are set on the CU, and remaining functions of the RLC layer and functions of protocol layers below the RLC layer are set on the DU. In another design, division of functions of the CU or the DU may alternatively be performed based on service types or other system requirements. For example, division may be performed based on latency. Functions whose processing time needs to meet a latency requirement are set on the DU, and functions whose processing time does not need to meet the latency requirement are set on the CU. In another design, the CU may alternatively have one or more functions of the core network. For example, the CU may be disposed on a network side to facilitate centralized management. In another design, a radio unit (radio unit, RU) of the DU is disposed remotely. The RU has a radio frequency function.

Optionally, the DU and the RU may be distinguished at a physical layer (physical layer, PHY). For example, the DU may implement a higher-layer function of the PHY layer, and the RU may implement a lower-layer function of the PHY layer. When used for sending, a function of the PHY layer may include a cyclic redundancy check (cyclic redundancy check, CRC) code addition, channel coding, rate matching, scrambling, modulation, layer mapping, precoding, resource mapping, physical antenna mapping, and/or radio frequency sending function. When used for reception, a function of the PHY layer may include CRC, channel decoding, rate de-matching, descrambling, demodulation, layer de-mapping, channel detection, resource de-mapping, physical antenna de-mapping, and/or a radio frequency receiving function. The higher-layer function of the PHY layer may include some functions of the PHY layer. For example, the some functions are closer to the MAC layer. The lower-layer function of the PHY layer may include some other functions of the PHY layer. For example, the part of functions are closer to the radio frequency function. For example, the higher-layer function of the PHY layer may include CRC code appending, channel coding, rate matching, scrambling, modulation, and layer mapping, and the lower-layer function of the PHY layer may include precoding, resource mapping, physical antenna mapping, and radio frequency sending functions. Alternatively, the higher-layer function of the PHY layer may include CRC code appending, channel coding, rate matching, scrambling, modulation, layer mapping, and precoding. The lower-layer function of the PHY layer may include resource mapping, physical antenna mapping, and radio frequency sending functions.

For example, a function of the CU may be implemented by one entity, or may be implemented by different entities. For example, functions of the CU may be further divided, that is, a control plane and a user plane are separated and implemented by different entities, which are a control plane CU entity (that is, a CU-CP entity) and a user plane CU entity (that is, a CU-UP entity). The CU-CP entity and the CU-UP entity may be coupled to the DU, to jointly complete functions of the access network device.

In the foregoing network architecture, signaling generated by the CU may be sent to the terminal device through the DU, or signaling generated by the terminal device may be sent to the CU through the DU. For example, signaling at the RRC layer or PDCP layer is finally processed as signaling at the physical layer and sent to the terminal device, or is converted from signaling received from the physical layer. Based on such architectures, the signaling at the RRC layer or PDCP layer may be considered to be sent through the DU, or sent through the DU and the RU.

Optionally, it is not limited that any one of the DU, the CU, the CU-CP, the CU-UP, and the RU may be a software module, a hardware structure, or a combination of a software module and a hardware structure. Different entities may exist in different forms, which is not limited. For example, the DU, the CU, the CU-CP, and the CU-UP are software modules, and the RU is a hardware structure. These modules and methods performed by these modules also fall within the protection scope of this disclosure.

It should be understood that a quantity and a type of devices in the communication system shown in FIG. 1A are just for an example, and this disclosure is not limited thereto. In actual application, the communication system may further include more terminal devices and more access network devices, and may further include another network element, for example, may include network management, a core network device, and/or a network element configured to implement an artificial intelligence function. The network management can classify network management work into three types based on the actual requirements for network operation of an operator: operation (Operation), administration (Administration), and maintenance (Maintenance). The network management may also be referred to as an operation, maintenance, and management (operation administration and maintenance, OAM) network element, and is briefly referred to as OAM. The operations mainly complete daily work performed on a network and a service, for example, analysis, prediction, planning, and configuration. The maintenance is mainly a daily operation activity, for example, testing and fault management performed on the network and the service. The network management can detect the network running status, optimize network connections and performance, improve network stability, and reduce network maintenance costs.

The method provided in this disclosure may be applied to communication between the access network device and the terminal device, or may be applied to communication between other communication devices, for example, communication between a macro base station and a micro base station in a wireless backhaul link, for example, communication between two terminal devices in a sidelink (sidelink, SL). This is not limited.

The method provided in this disclosure relates to artificial intelligence (artificial Intelligence, AI). AI may be implemented by using various possible technologies, for example, by using a machine learning (machine learning, ML) technology. In this disclosure, the communication system may also include a network element that implements an artificial intelligence function. For example, an AI function (for example, an AI module or an AI entity) may be configured in an existing network element in the communication system to implement an AI-related operation. For example, in a 5G new radio (new radio, NR) system, the existing network element may be an access network device (for example, a gNodeB), a terminal device, a core network device, the network management, or the like. Alternatively, an independent network element may be introduced in the communication system to perform an AI-related operation. The independent network element may be referred to as an AI network element, an AI node, or the like. This name is not limited in this disclosure. In this case, a network element that performs the AI-related operation is the network element with the built-in AI function (for example, the AI module or the AI entity). The AI-related operation may also be referred to as an AI function. For details about the AI function, refer to the following descriptions. The AI network element may be directly connected to the access network device in the communication system, or may be indirectly connected to the access network device by using a third-party network element. The third-party network element may be a core network element such as an authentication management function (authentication management function, AMF) network element or a user plane function (user plane function, UPF) network element. For example, as shown in FIG. 1B, an AI network element 140 is introduced into the communication system shown in FIG. 1A.

For ease of understanding, the following describes some terms of AI in this disclosure with reference to A1 to A4. It may be understood that the description is not intended to limit this disclosure.

A1: AI model

The AI model is a specific implementation of the AI function. An AI model represents a mapping relationship between an input and an output of a model, and may be a function model that maps an input in a dimension to an output in a dimension. The AI model may be a neural network or another machine learning model, such as a decision tree or a support vector machine. In this disclosure, the AI model may be briefly referred to as a model. In this disclosure, the AI function may include at least one of the following: data collection (collecting training data and/or inference data), data preprocessing, model training (or referred to as model learning), model information release (model information configuration), model inference, or inference result release. The inference may also be referred to as prediction. In this disclosure, the AI model may be briefly referred to as a model.

A2: Machine learning

The machine learning is an important technical way for implementing artificial intelligence. For example, the machine learning can learn a model or a rule from raw data. The machine learning is classified into supervised learning, unsupervised learning, and reinforcement learning.

For the supervised learning, based on a collected sample (or referred to a sample value) and a sample label, a mapping relationship between the sample and the sample label is learned by using a machine learning algorithm, and the learned mapping relationship is expressed by using a machine learning model. A process of training the machine learning model is a process of learning the mapping relationship. For example, in signal detection, the sample is a received signal including noise, and the sample label is a real constellation point corresponding to the received signal. The machine learning expects to learn the mapping relationship between the sample and the sample label through training. During the training, a model parameter is optimized by calculating an error between a model output (namely, a predicted value) and the sample label. Once the mapping relationship is learned, a sample label of each new sample can be predicted by using the learned mapping relationship. The mapping relationship learned through the supervised learning may include linear mapping and non-linear mapping. A task of the machine learning may be classified into a classification task and a regression task based on a type of the sample label.

For the unsupervised learning, an internal pattern of a sample is explored autonomously by using an algorithm only based on the collected sample. In the unsupervised learning, a type of algorithm (such as self-encoder and adversarial generative network) can use the sample as a supervised signal. The model learns a mapping relationship from the sample to the sample. During training, a model parameter is optimized by calculating an error between a predicted value of a model and a sample, thereby implementing self-supervised learning. The self-supervised learning may be used in an application scenario of signal compression and decompression recovery.

The reinforcement learning is a type of algorithm that learns a strategy of solving problems by interacting with an environment. The reinforcement learning is different from the supervised learning and the unsupervised learning, and does not have a specific sample label. The algorithm needs to interact with the environment to obtain a reward signal fed back by the environment and adjust a decision action to obtain a larger reward signal value. For example, in downlink power control, a reinforcement learning model adjusts downlink transmit power of each terminal based on a total system throughput fed back by a wireless network, to expect to obtain a higher system throughput. A goal of the reinforcement learning is also to learn a mapping relationship between an environment status and an optimal decision action. Training of the reinforcement learning is implemented through iterative interaction with the environment.

A3: Neural network

The neural network is a specific implementation of an AI or a machine learning technology. According to a general approximation theorem, the neural network can approximate any continuous function in theory, so that the neural network has a capability of learning any mapping. A conventional communication system needs to design a communication module with rich expert knowledge. However, a neural network-based deep learning communication system can automatically discover an implicit pattern structure from a large quantity of datasets, establish a mapping relationship between data, and obtain performance better than that of a conventional modeling method.

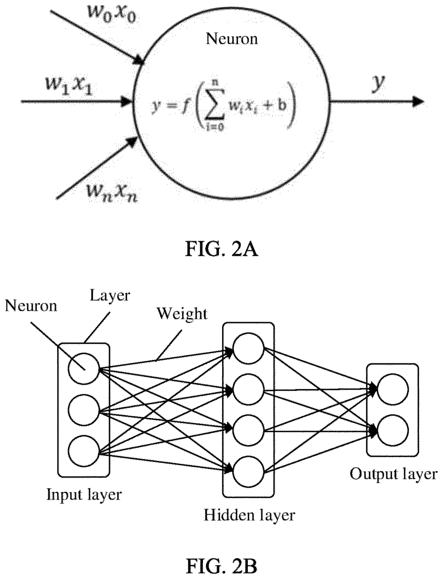

The idea of the neural network is from a neuron structure of brain tissue. For example, each neuron performs a weighted summation operation on an input value of the neuron, and outputs an operation result through an activation function. FIG. 2A is a diagram of a neuron structure. It is assumed that an input of a neuron is $x = [x_0, x_1, \ldots, x_n]$, and a weight that corresponds to the input is $w = [w, w_1, \ldots, w_n]$, where $w_i$ is a weight of $x_i$, and is used to perform weighting on $x_i$. For example, an offset for performing weighted summation on the input values based on the weights is b. There may be a plurality of forms of the activation function. It is assumed that an activation function of a neuron is $y = f(z) =$ max(0, z), an output of the neuron is 
$$y = f\left(\sum_{i=0}^{i=n} w_i * x_i + b\right) = \max\left(0, \sum_{i=0}^{i=n} w_i * x_i + b\right)$$
. For another example, if an activation function of a neuron is y = f(z) = z, an output of the neuron is $y = f\left(\sum_{i=0}^{i=n} w_i * x_i + b\right) =$

$\sum_{i=0}^{i=n} w_i * x_i + b$ . b may be any possible value such as a decimal, an integer (for example, 0, a positive integer, or a negative integer), or a complex number. Activation functions of different neurons in the neural network may be the same or different.

The neural network generally includes a plurality of layers, and each layer may include one or more neurons. By increasing a depth and/or a width of the neural network, an expression capability or a function fitting capability of the neural network can be improved, and a more powerful information extraction and abstract modeling capability is provided for a complex system. The depth of the neural network may be a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer, and the output layer obtains an output result of the neural network. In another implementation, the neural network includes an input layer, a hidden layer, and an output layer. The input layer of the neural network performs neuron processing on received input information, and transfers a processing result to the intermediate hidden layer. The hidden layer performs calculation on the received processing result to obtain a calculation result. The hidden layer transfers the calculation result to the output layer or an adjacent hidden layer, and finally the output layer obtains an output result of the neural network. One neural network may include one hidden layer, or include a plurality of hidden layers that are sequentially connected. This is not limited.

As described above, each neuron performs a weighted summation operation on an input value of the neuron, and a weighted summation result is generated and output according to a non-linear function. Weights of the weighted summation operation of neurons in the neural network and the nonlinear function are referred to as parameters of the neural network. For example, a non-linear function of a neuron is max{0, x}, a parameter weight of an operation

$\max\{0, \sum_{i=0}^{n} w_i x_i +$ b\} performed by the neuron is $w = [w, w_1, ..., w_n]$, and an offset of weighted summation is b. Parameters of all neurons in a neural network form the parameters of the neural network.

The neural network in this disclosure is, for example, a deep neural network (deep neural network, DNN). The DNN usually has a plurality of hidden layers, and a weight that corresponds to each neuron in the DNN is a model parameter of the DNN. The DNN may use a supervised learning strategy or an unsupervised learning strategy to optimize the model parameter. Based on a network construction manner, the DNN may include a feedforward neural network (feedforward neural network, FNN), a convolutional neural network (convolutional neural network, CNN), and a recurrent neural network (recurrent neural network, RNN). An FNN is used as an example. FIG. 2B shows a neural network structure. A characteristic of the FNN is that every two neurons at adjacent layers are completely connected.

The CNN may be applied to processing data with a grid-like structure. The data with the grid-like structure may include time sequence data (time axis discrete sampling), image data (two-dimensional discrete sampling), and the like. A convolution layer of the CNN does not perform a convolution operation by using all input information at a time. Instead, one or more windows of a fixed size are set, and a part of input information is captured by using each window to perform a convolution operation. Such a design can greatly reduce a calculation amount of a model parameter. Specifically, performing a convolution operation on any one of one or more windows of a fixed size may be understood as performing a multiplication operation and then an addition operation on a coefficient (for example, a weighting coefficient) of the window and some input information captured by the window. After the convolution operation, the output information corresponding to the window may be obtained. Coefficients of different windows may be independently configured. For example, different coefficients may be configured for different windows, so that the CNN can better extract a feature of input data. The coefficient of the window may include a convolution kernel. Optionally, types of some input information captured in different windows may be different. For example, a person and an object in a same secondary image may be understood as different types of information. In two windows with fixed sizes, one window may capture a person in the image, and the other window may capture an object in the image. The RNN is a DNN network that uses feedback time sequence information. An input of the RNN includes a part of a new input value at a current moment and an output value of the RNN at a previous moment, where the output value at the previous moment may be determined by an activation function and an input at the previous moment. The RNN is suitable for obtaining a sequence feature having a time correlation, and is suitable for application scenario such as speech recognition and channel encoding and decoding.

In addition, in a training process of the neural network, a loss function may be defined. The loss function describes a difference or a difference value between an output value of the neural network and an ideal target value, and this disclosure does not limit a specific form of the loss function. A training process of the neural network is a process in which a parameter of the neural network is adjusted, so that a value of the loss function is less than a threshold, or a value of the loss function meets a target requirement. A parameter of the neural network is adjusted. For example, at least one of the following parameters is adjusted: a quantity of layers of the neural network, a width of the neural network, a weight of a neuron, or a parameter in an activation function of a neuron.

A4: Federated learning (federated learning, FL)

The federated learning is a machine learning framework. In the framework, nodes do not need to exchange data, but an intermediate result obtained during training is transferred, for example, a parameter or a gradient of a model can represent information about the model. That is, the federated learning can be used to model machine learning, that is, train an AI model, to meet user privacy protection and data security requirements. The federated learning, as a distributed machine learning paradigm, can effectively resolve a problem of a data silo. Nodes participating in the federated learning can perform joint modeling without sharing data. This breaks the data silo in a technology and implements AI collaboration.

Generally, according to different distribution of data sources of all participating parties, the federated learning may be classified into three types: horizontal federated learning, vertical federated learning, and federated transfer learning. The horizontal federated learning means that, when user features of a plurality of datasets (which may alternatively be understood as sample sets) overlap much but users overlap little, the datasets are split horizontally (namely, in a user dimension), and a model is trained based on some data that has a same user feature but users who are incompletely the same. The vertical federated learning means that, when users of a plurality of datasets overlap much but user features overlap little, the datasets are split vertically (namely, in a feature dimension), and a model is trained based on some data that has a same user but user features that are incompletely the same. The federated transfer learning means that, when the user and user features of a plurality of datasets overlap little, data is not split but transfer learning is used to overcome a case in which data or sample labels are insufficient.

This disclosure specifically relates to an application of the federated learning in a wireless network. In the wireless network, there is a case in which data required for training a model is distributed on a plurality of nodes, and the data relate to privacy information of the nodes, and such case is not suitable for direct data transmission. For this case, a federated learning technology may be used to enable a plurality of nodes to participate in the federated learning.

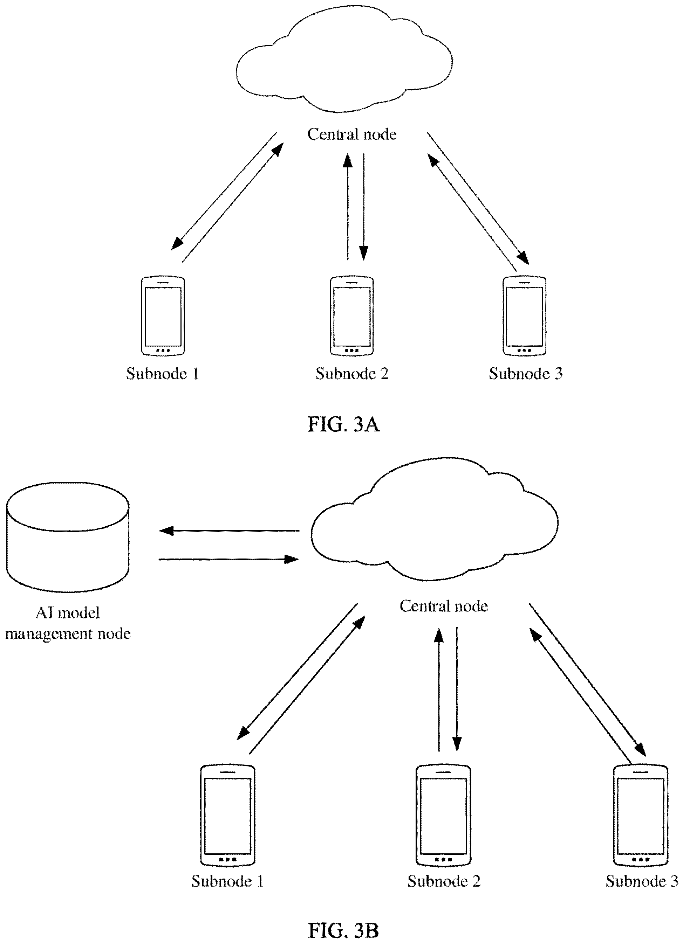

In a possible design, a plurality of nodes train local models, and send parameter information of the local models trained by the plurality of nodes to a central node. The central node may calculate (or trains) a federated learning model based on the local model parameters of the plurality of nodes, and send the federated learning model to the plurality of nodes. The plurality of nodes continue to update the local model and send the parameter information of the local model to the central node. In this way, iteration is performed until convergence occurs. FIG. 3A shows a communication architecture, for example, including a central node and three subnodes participating in federated learning: a subnode 1, a subnode 2, and a subnode 3. The subnode 1, the subnode 2, and the subnode 3 may separately collect training data, train a local model of the subnode 1, the subnode 2, and the subnode 3, and send parameter information of the local models to the central node. The central node may train a federated learning model.

In another possible design, a plurality of nodes train local models, and send parameter information of the local models trained by the plurality of nodes to a central node. The central node may forward local model parameters of the plurality of nodes to an AI model management node. The AI model management node calculates (or trains) a federated learning model based on the local model parameters of the plurality of nodes, and sends the federated learning model to the plurality of nodes. The plurality of nodes continue to update the local model, the parameter information of the local model is sent to the AI model management node through the central node. In this way, iteration is performed until convergence occurs. In this case, the central node works as a relay between the AI model management node and the node participating in the federated learning. FIG. 3B shows a communication architecture, for example, including an AI model management node, a central node, and three subnodes participating in federated learning: a subnode 1, a subnode 2, and a subnode 3. The subnode 1, the subnode 2, and the subnode 3 may separately collect training data, train a local model of the subnode 1, the subnode 2, and the subnode 3, and send parameter information of the local models to the central node. The central node may forward the parameter information of the local models from the nodes participating in the federated learning to the AI model management node, and the AI model management node performs training/update operation on the federated learning model, and sends the parameter information of the federated learning model to the central node. Then, the central node forwards the parameter information of the federated learning models to the corresponding subnode 1, subnode 2, and subnode 3.

It may be understood that the central node is a node configured to train a federated learning model, and the central node may be replaced with another name. Different from the central node, the foregoing plurality of nodes that participate in the federated learning and can train a local model may also be referred to as a plurality of subnodes, a plurality of distributed nodes, or another name. This disclosure does not limit the name. This disclosure is described below by using an example in which a central node trains a federated learning model and a subnode trains a local model.

Specifically, a plurality of nodes participating in the federated learning may access the central node, to communicate with the central node. For example, the central node in FIG. 3A/FIG. 3B may be an access network device, and nodes participating in the federated learning: the subnode 1, the subnode 2, and the subnode 3, may be terminal devices; or the central node may be a core network device, and the subnode 1, the subnode 2, and the subnode 3 may be access network devices. The central node, the subnode 1, the subnode 2, and the subnode 3 may all be AI network elements/modules having an AI function. The AI model management node in FIG. 3B may be the independent AI network element or the module having the AI function.

For example, in a positioning, the terminal device may collect data including a geographical location. However, data collected by a single terminal device is simple and cannot traverse all possible distributions of real data. In addition, the single terminal device receives a small amount of data. If it is difficult to train, based on only the data collected by the single terminal device, a model that meets a performance requirement. However, if a plurality of terminal devices send data to the access network device or the core network device, for example, a location management function (location management function, LMF) network element, the access network device or the LMF network element trains a model. Sending data to the access network device or the LMF network element causes privacy leakage of the terminal device since the geographical location of the terminal device relates to privacy, and overheads of transmitting data by the terminal device to the access network device or the LMF network element are high. In this case, a federated learning technology may be used. For example, a plurality of terminal devices participate in the federated learning. Each terminal device may train a local model based on respective data, and then send parameter information of the local model to the access network device or the LMF network element. The access network device or the LMF network element trains the federated learning model, and sends the federated learning model to the plurality of terminal devices. The plurality of terminal devices continue to update the local model, and send the parameter information of the local model to the access network device or the LMF network element. In this way, iteration is performed until convergence occurs.

In a related technology, a central node trains only one federated learning model each time, that is, federated learning models sent to the plurality of subnodes each time are the same. The following records same federated learning models as global models, and describes the related technology in detail. In a wireless communication scenario, different terminal devices need to perform distributed training on data of a same type, and the horizontal federated learning is suitable. A main procedure of the horizontal federated learning is as follows:

S1: The central node delivers the global models to the plurality of subnodes. Each of the plurality of subnodes may train a local model based on local data (that is, a sample obtained by the node) and the global model. In the foregoing positioning, the central node may be a base station or an LMF, and a subnode in the plurality of subnodes may be a terminal device.

S2: Each of the plurality of subnodes trains a local model by using local data, and uploads a parameter of the local model to the central node, and the central node aggregates the parameter of the local model of each subnode to update a global model parameter, that is, performs update training on the global model in S1.

Repeat the preceding two steps until the model converges.

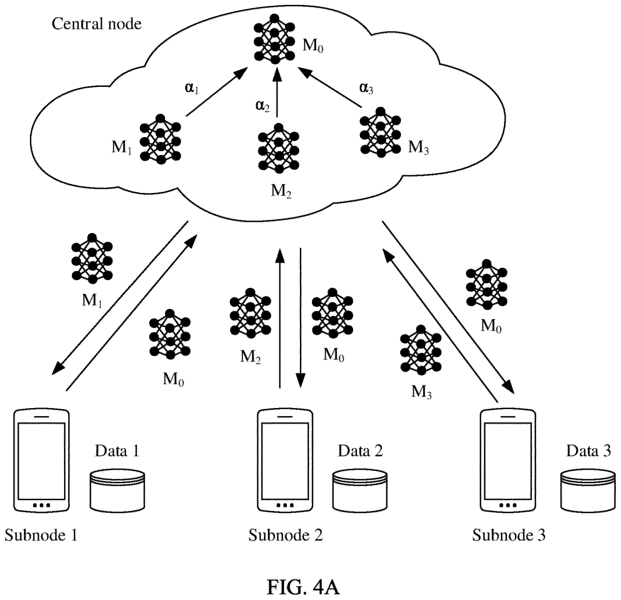

As shown in FIG. 4A, an example in which the plurality of subnodes include a subnode 1, a subnode 2, and a subnode 3 is used. First, the central node sends an initial model to each of the subnode 1, the subnode 2, and the subnode 3. The subnode 1 performs update training on the initial model based on local data of the subnode 1 (that is, data 1 in FIG. 4A), to obtain a local model $M_1$. The subnode 2 performs update training on the initial model based on local data of the subnode 2 (that is, data 2 in FIG. 4A) to obtain a local model $M_2$. The subnode 3 performs update training on the initial model based on local data (that is, data 3 in FIG. 4A) of the subnode 3, to obtain a local model $M_3$. The subnodes 1, 2, and 3 send parameters of local models of the subnodes 1, 2, and 3 to the central node, and the central node performs weighting on the local models of the subnodes to obtain a global model $M_0 = \alpha_1 M_1 + \alpha_2 M_2 + \alpha_3 M_3$, where $\alpha_i$ is a ratio of a local data volume of an $i^{th}$ subnode in the plurality of subnodes to a total local data volume of the plurality of subnodes, and $M_i$ indicates a local model of the $i^{th}$ subnode in the plurality of subnodes or may be understood as a parameter of a local model of the $i^{th}$ subnode. The value of $i$ is 1, 2, or 3. Then, the central node sends $M_0$ to each subnode, and each subnode continues to perform local training based on the received global model, and then uploads a parameter of the trained local model to the central node. In this way, iteration is performed until the model converges.

In an actual application, there is a distribution difference between the local data of the foregoing subnodes. For example, in the indoor positioning, different terminal devices are located in different areas for a long time or frequently. In this case, by using the foregoing related technology, a plurality of subnodes use a same global model to perform update training on the local model. For a subnode whose data distribution is greatly different from that of another subnode, performance of the local model is poor, and the performance of the federated learning model is reduced.

Based on this, this disclosure provides a communication method, to improve the performance of a federated learning model. In this disclosure, when the central node trains the federated learning model based on parameter information of local models of the plurality of subnodes participating in the federated learning, the central node personalizes the federated learning models corresponding to the different subnodes, so that the plurality of subnodes can be prevented from performing update training on the local model by using a same global model, to improve the performance of the federated learning model.

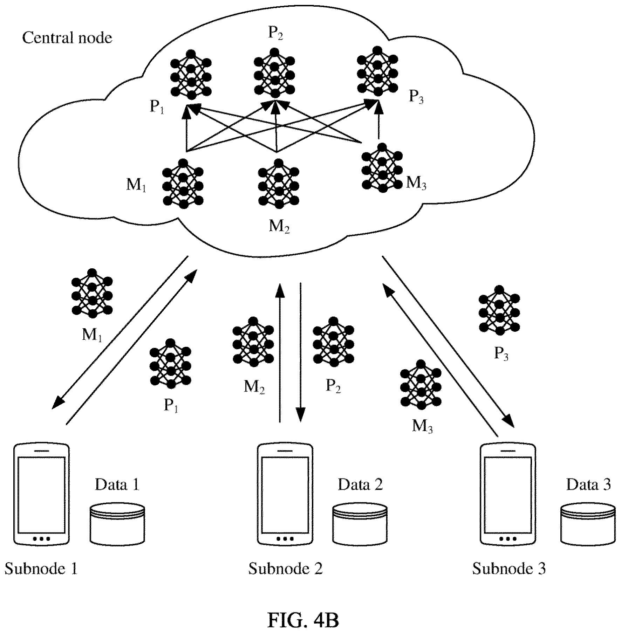

As shown in FIG. 4B, an example in which the plurality of subnodes include a subnode 1, a subnode 2, and a subnode 3 is used. First, the central node sends an initial model to each of the subnode 1, the subnode 2, and the subnode 3. The subnode 1 performs update training on the initial model based on local data of the subnode 1 (that is, data 1 in FIG. 4B), to obtain a local model $M_1$. The subnode 2 performs update training on the initial model based on local data of the subnode 2 (that is, data 2 in FIG. 4B) to obtain a local model $M_2$. The subnode 3 performs update training on the initial model based on local data (that is, data 3 in FIG. 4B) of the subnode 3, to obtain a local model $M_3$. The subnodes 1, 2, and 3 send parameters of local models of the subnodes 1, 2, and 3 to the central node. In this disclosure, the central node may train a same global model for at least two of the plurality of subnodes, and train a federated learning model corresponding to a remaining subnode, for example, referred to as a personalized model. Alternatively, the central node may train a personalized model for each of the plurality of subnodes. As an example, FIG. 4B shows that the central node separately trains a personalized model for the subnodes 1, 2, and 3. The subnodes 1, 2, and 3 send parameters of local models of the subnodes 1, 2, and 3 to the central node. The central node uses different weightings for different subnodes, and perform weighting on the local models of the subnodes to obtain personalized models of the subnodes, for example, a personalized model $P_k = \beta_{1k}M_1 + \beta_{2k}M_2 + \beta_{3k}M_3$ of a subnode with the $k^{th}$ order, where a value of k is 1, 2, or 3, and different $P_k$ correspond to different $\beta_{1k}$, $\beta_{2k}$. and $\beta_{3k}$. Then, the central node indicates a corresponding personalized model to each subnode, for example, sends $P_1$ to the subnode 1, sends $P_2$ to the subnode 2, and sends $P_3$ to the subnode 3. Each subnode continues to perform local training based on the received federated learning model, and then uploads a parameter of the trained local model to the central node. In this way, iteration is performed until the model converges.

The following further describes in detail the communication method provided in this disclosure with reference to accompanying drawings.

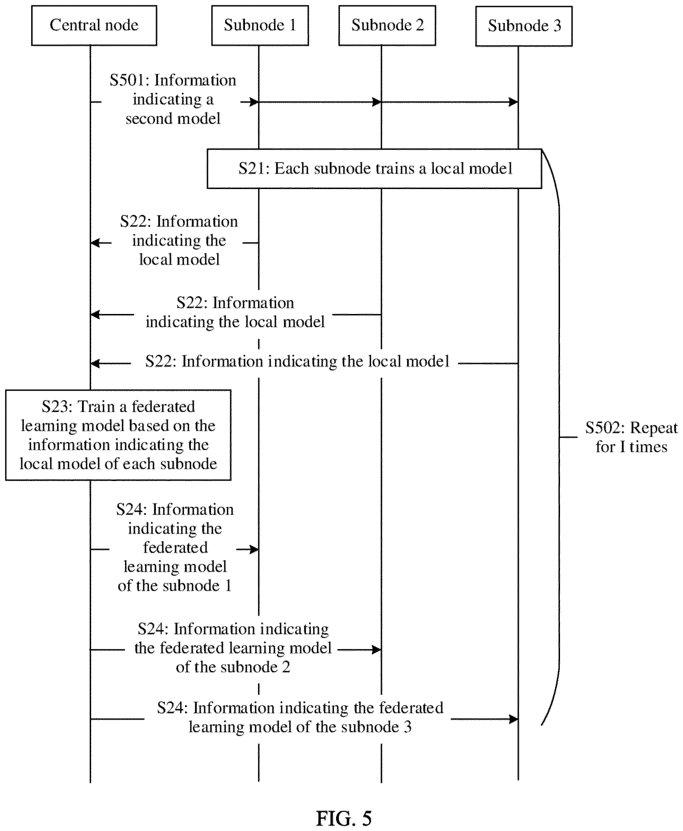

FIG. 5 shows a communication method. The method mainly includes the following procedure.

S501: A central node sends, to a plurality of subnodes participating in federated learning, information indicating a second model.

For example, FIG. 5 shows three subnodes participating in the federated learning: a subnode 1, a subnode 2, and a subnode 3. For an example of the central node and the subnode, refer to the foregoing description in FIG. 3A. Details are not described herein again in this disclosure.

The information indicating the second model is used by each of the plurality of subnodes to determine a $1^{st}$ local model of each subnode. The second model may also be understood as an initial model. For example, the information indicating the second model may be the second model or parameter information of the second model. The parameter information of the second model may represent the second model. The parameter information of the second model may indicate one or more of the following parameters: a structure type of the second model, a structure parameter of the second model, and a model parameter of the second model. The following uses an example in which the central node sends the parameter information of the second model for description.

Some examples of the parameter information of the second model are as follows:

the structure type of the second model, for example, a CNN model, an RNN model, a transformer model, a random forest, or a support vector machine;

the structure parameter of the second model, where specifically, models of different structure types may correspond to different structure parameters, for example, when the second model is the CNN model, the structure parameter of the second model may include a quantity of convolutional layers in a CNN, a quantity of channels and a size of a convolutional kernel in each convolutional layer, a quantity of fully connected layers, and/or a quantity of neurons; when the second model is the RNN model, the structure parameter of the second model may include a quantity of neural network layers of an RNN and a calculation manner for each state in each layer of structure, where the state may be a forget gate, an input gate, an output gate, an update gate, an implicit state, or the like; when the second model is the transformer model, the structure parameter of the second model may include quantities of encoders and decoders in the transformer model, and a calculation manner for an internal element in each encoder and decoder, where the internal element may be a query vector, a key vector, a value vector, or the like; when the second model is the random forest, the structure parameter of the second model may include a quantity and depths of trees in the random forest; or when the second model is the support vector machine, the structure parameter of the second model may include a type of a kernel function in the support vector machine, and the like; and

the model parameter of the second model, which may be understood as a parameter about constructing the second model, for example, a weight and an offset that correspond to each neuron in a neural network, a determining criterion and a threshold that correspond to each node in the random forest, and a corresponding weight and offset in the support vector machine.

Optionally, some optional model structures may be specified in a protocol. The model structure includes a structure type and a structure parameter. The parameter information of the second model includes information indicating the structure type and the structure parameter that are of the second model and that belong to the model structures specified in the foregoing protocol, and further includes information indicating the model parameter. Alternatively, a model structure may be specified in a protocol. In this case, the parameter information of the second model indicates only the model parameter of the second model, and a node participating in the federated learning may determine the structure type and the structure parameter of the second model according to the protocol. Alternatively, a combination of a model structure and a model parameter may be specified in a protocol, and the central node may include, in the parameter information of the second model, indication information of a combination, of a model structure and a model parameter, specified in the protocol. In addition, it may be understood that the structure type and the structure parameter of the second model may also be directly specified in a protocol. In this case, the central node may not need to send the parameter information of the second model. In other words, in this case, S501 does not need to be performed. S501 is an optional step.

Specifically, the central node may send the parameter information of the second model to the plurality of subnodes based on a preconfigured resource. For example, the central node or the foregoing plurality of subnodes may configure parameter information of a model (for example, the second model) sent by the central node; or another federated learning management node (for example, a third-party network element or an independent AI network element) configures, for the central node and the plurality of subnodes, a resource for sending parameter information of a model by the central node. For example, the central node is an access network device, and the plurality of subnodes are terminal devices. A resource used by the central node to send the second model may be a downlink resource. The downlink resource may be specifically a control channel resource, for example, a physical downlink control channel (physical downlink control channel, PDCCH) resource, or the downlink resource may be a data channel resource, for example, a physical downlink shared channel (physical downlink share channel, PDSCH) resource. Specifically, the resource may be understood as a time-frequency resource, including a time domain resource, for example, a slot or a symbol, and a frequency domain resource, for example, a frequency domain resource block number, a subband number, a frequency hopping parameter, a modulation and coding scheme, and other parameters.

Specifically, the central node may send the parameter information of the second model in a broadcast or multicast manner. For example, the central node may send the parameter information of the second model in the broadcast manner for a cell in which the foregoing plurality of subnodes are located. It may be understood that the plurality of subnodes may be located in a same cell, or the plurality of subnodes may be located in different cells. Another node that does not participate in the federated learning in the cell in which the plurality of subnodes are located may also receive information broadcast by the central node. For another example, the central node may consider a plurality of subnodes participating in the federated learning as a group, and the plurality of subnodes in the same group correspond to a same group number. The central node sends, in the multicast manner, the parameter information of the second model to the plurality of subnodes in the group based on a same resource. For another example, the central node may group a plurality of subnodes, for example, group the subnodes based on computing capabilities of all subnodes, and computing capabilities of subnodes in a same group are similar. Different groups are correspondingly configured with different group numbers. The central node may configure different resources for different groups, to send, in the multicast manner, the parameter information of the second model and a group number of a group to a subnode in the group based on a resource corresponding to the group.

Further, optionally, the central node may further indicate, to the plurality of subnodes, a training parameter for training a local model by each subnode. The training parameter may include one or more of a quantity of iterations, a learning rate, a loss function, and a batch size (Batch_Size) that are required by the subnode for training the local model. The subnode may train the local model based on the training parameter.

S502: Repeat the following steps S21 to S24 for I times, where I indicates a quantity of iterations for training a federated learning model, and I is a positive integer.

S21: Each of the plurality of subnodes trains a local model.

Specifically, each subnode may train the local model based on the parameter information of the model sent by the central node. Training data used by the subnode to train the local model includes local data collected by the subnode. Optionally, structure types and structure parameters of local models trained by all subnodes are the same. For example, if each subnode most recently receives the information that indicates the second model and that is described in S501, each subnode may perform the first-time (or referred to as 1st) local model training based on the collected local data and the information indicating the second model. In addition, optionally, the training data used by the subnode to train the local model may further include label data.

Each subnode may determine training data of the local model for different application scenarios.

For example, in a positioning scenario, local data collected by the subnode may be a channel response, to train a local model that uses the channel response as an input and uses location coordinates as an output. The subnode may further obtain label data, namely, location coordinates, corresponding to the channel response. Optionally, the subnode may obtain the location coordinates by using a positioning method based on a time difference of arrival. For example, the subnode is a terminal device, and the central node is an LMF. The terminal device receives positioning reference signals (positioning reference signal, PRS) from a plurality of access network devices. The terminal device measures a time difference of arrival of PRSs sent by different access network devices, and feeds back the foregoing time difference of arrival to the LMF. The LMF may infer, based on the time difference of arrival, a difference of distances from different access network devices to the terminal device, and further determine a location of the terminal device. Then, the LMF feeds back the location of the terminal device to the terminal device by using signaling, and the terminal device may use the location as label data corresponding to the local data. Optionally, the access network device may repeatedly send the PRS, and the LMF repeatedly calculates the location of the terminal device in short time. If a plurality of locations of the terminal device obtained through calculation in the short time are stable (that is, a difference between the plurality of locations is small, for example, less than a specified threshold), it may indicate that test positioning precision is high. The LMF feeds back a stable location of the terminal device to UE by using signaling, and the UE uses the location as a label of the local data. This can improve performance of the local model.

For example, in a beam management scenario, the subnode may be an access network device, and the central node may be a device that can be accessed by the access network device, for example, an independent AI network element, or a convergence access network device that allows another access network device to access. The local data that may be collected by the subnode may be a channel measurement value (for example, energy or quality of a received signal), and a machine learning model that uses a small quantity of channel measurement values as an input and uses an index of an optimal beam as an output is trained, where the index of the optimal beam is the label data corresponding to the local data. Optionally, the subnode (namely, the access network device) may send, one by one, by using all possible beams (or referred to as beam directions), signals to a terminal device that accesses the subnode, and determine the index of the optimal beam based on feedback of the terminal device. For example, the terminal device may determine a beam corresponding to best received signal quality, and the beam is denoted as a (performance) optimal beam. The index of the optimal beam is fed back to the subnode. In addition, the channel measurement value collected by the subnode may also be obtained from the terminal device. For example, when feeding back the index of the optimal beam, the terminal device may further feed back a small quantity of channel measurement values.

Each subnode may determine, based on the collected local data, the application scenario, or the structure type of the local model, the loss function used for training the local model. For example, a cross-entropy function may be used as a loss function in a classification problem, for example, line of sight (line of sight, LOS)/non-line of sight (non-line of sight, NLOS) recognition, and a mean square error (mean squared Error, MSE) or a mean absolute error (mean absolute error, MAE) may be used as a loss function in a regression problem, for example, channel estimation.

S22: Each of the plurality of subnodes sends, to the central node, information indicating the local model.

The information indicating the local model may be the local model or parameter information of the local model. The following uses an example in which the subnode sends the parameter information of the local model for description. For example, FIG. 5 shows S22: The subnode 1, the subnode 2, and the subnode 3 separately send the parameter information of the local model to the central node.

Specifically, the parameter information of the local model may be understood with reference to the following content:

In an optional implementation, after the local model is trained by the subnode for any one of the I times, the parameter information of the local model sent by the subnode may include a model parameter of the local model.

For example, each time after training the local model, the subnode sends, to the central node as a vector, all model parameter combinations of the local model obtained through current training. It is assumed that the local model has a total of G model parameters. Each time after training the local model, the subnode may send, to the central node as a vector, a combination of G model parameters of the local model obtained through current training. For example, the parameter information of the local model reported by a $k^{th}$ subnode in the plurality of subnodes may be denoted as $M_k = [m_{k,1}, m_{k,2}, \ldots, m_{k,G}]$, where $m_{k,j}$ indicates a $j^{th}$ model parameter of the local model of the $k^{th}$ subnode, j is a positive integer, and $1 \leq j \leq G$. k is a positive integer from 1 to K, and K is a quantity of a plurality of subnodes. The foregoing $k^{th}$ subnode may also be described as a subnode with the $k^{th}$ order, and indicates any one of the plurality of subnodes. For definitions of j, G, k, and K in the following of this disclosure, refer to this example for understanding. Details are not described in the following content.

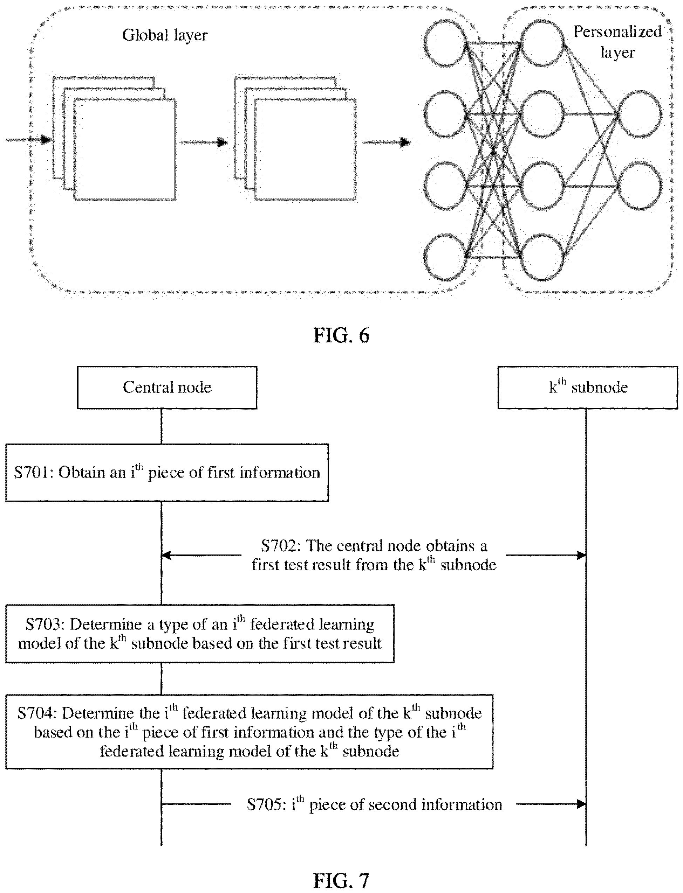

For example, each time after training the local model, the subnode divides all model parameters of the local model obtained through current training into a plurality of combinations, uses each combination as a vector, and sends vectors corresponding to the plurality of combinations to the central node. Optionally, the plurality of combinations obtained through division may be determined based on a structure of the local model. For example, as shown in FIG. 6, the local model may be divided into a global layer and a personalized layer. The plurality of combinations obtained through division include a model parameter of the global layer and a model parameter of the personalized layer. This is not limited in this disclosure.

In another optional implementation, after the local model is trained by the subnode for the first time in the I times, the parameter information of the local model sent by the subnode may include a model parameter of the local model. After the local model is trained by the subnode for any one of the second time to the $I^{th}$ time in the I times, the parameter information of the local model sent by the subnode may include a difference between the parameter information of the local model trained this time and the parameter information of the local model trained last time. The difference may also be described as a gradient of the model parameter of the local model trained this time, or briefly referred to as a gradient of the local model trained this time.

For example, it is assumed that the local model has G parameters. After the subnode trains the local model for the first time, the subnode may send, to the central node as a vector, a combination of G parameters of the local model obtained through current training. For details, refer to the foregoing optional implementation. Details are not described herein again in this disclosure. After the subnode trains the local model for any one of the second time to the $I^{th}$ time, the subnode may send, to the central node, a set of differences between G parameters of the local model that are obtained through current training and G parameters of the local model obtained through previous training, that is, a gradient of each parameter, as a vector. For example, in each of the second time to the $I^{th}$ time, the parameter information of the local model reported by the $k^{th}$ subnode in the plurality of subnodes may be denoted as $\Delta M_k = [\Delta m_{k,1}, \Delta m_{k,2}, \dots, \Delta m_{k,G}]$, where $\Delta m_{k,j}$ indicates a difference between a jth parameter of the local model trained by the $k^{th}$ subnode this time and a jth parameter of the local model trained last time, or it may be understood that $\Delta m_{k,j}$ indicates a gradient of the $j^{th}$ parameter of the local model trained by the $k^{th}$ subnode this time. j is a positive integer, and $1 \leq j \leq G$.

For example, each time after training the local model, the subnode divides a gradient of the local model obtained through current training into a plurality of combinations, uses each combination as a vector, and sends vectors corresponding to the plurality of combinations to the central node. Optionally, a plurality of combinations obtained through division may be determined based on a structure of the local model. For example, as shown in FIG. 6, the local model is divided into a global layer and a personalized layer. The plurality of combinations obtained through division include a gradient of the global layer and a gradient of the personalized layer. This is not limited in this disclosure.

Optionally, the subnode may determine, based on an indication of the central node, that the parameter information of the local model includes the foregoing model parameter, the gradient of the model parameter, other information, or the like. Optionally, the central node may further indicate or pre-agree that when the subnode divides the parameter information of the local model into a plurality of combinations and reports the plurality of combinations to the central node, parameter types in different combinations may be different. The parameter type herein may be a model parameter or the gradient of the model parameter. Alternatively, parameter types of some combinations in the plurality of combinations may be set to model parameters, and parameter types of the other combinations may be set to gradients. Specifically, configuration may be performed with reference to an actual application, and this is not limited in this disclosure.

In addition, the parameter information of the local model sent by the subnode may further include auxiliary information, where the auxiliary information indicates a quantity of samples of the local data collected by the subnode and/or a parameter type of the parameter information of the local model.

Specifically, the subnode may send the parameter information of the local model to the central node based on a preconfigured resource. For example, the subnode may send the parameter information of the local model by using the preconfigured resource. The central node may configure, for the plurality of subnodes, a resource for sending the parameter information of the local model by the subnode, or another federated learning management node (for example, a third-party network element or an independent AI network element) may configure, for the central node and the plurality of subnodes, a resource for sending the parameter information of the local model by the subnode. For example, the central node is an access network device, and the plurality of subnodes are terminal devices. A resource used by the subnode to send the parameter information of the local model may be an uplink resource. The uplink resource may be specifically a control channel resource, for example, a physical uplink control channel (physical uplink control channel, PUCCH) resource, or the uplink resource may be a data channel resource, for example, a physical uplink shared channel (physical uplink share channel, PUSCH) resource. Specifically, the resource may be understood as a time-frequency resource, including a time domain resource, for example, a slot or a symbol, and a frequency domain resource, for example, a frequency domain resource block number, a subband number, a frequency hopping parameter, a modulation and coding scheme, and other parameters.

Optionally, when the subnode divides the parameter information of the local model into a plurality of combinations and reports the plurality of combinations to the central node, resources occupied for reporting the parameter information of the local model in different combinations may be different, or in the plurality of combinations, resources occupied for reporting parameter information of some combinations and parameter information of the other combinations are different. Specifically, configuration may be performed with reference to an actual application, and this is not limited in this disclosure.

S23: The central node trains the federated learning model based on information indicating a local model of each subnode.

Specifically, an $i^{th}$ time in the foregoing I times is used as an example. The central node may obtain an $i^{th}$ piece of first information, and the $i^{th}$ piece of first information indicates the $i^{th}$ local model of each of the plurality of subnodes. Specifically, the $i^{th}$ piece of first information may include information that is sent by each of the plurality of subnodes and that indicates the $i^{th}$ local model.

Specifically, the $k^{th}$ subnode indicates any one of the plurality of subnodes, and the central node may train an $i^{th}$ federated learning model of the $k^{th}$ subnode based on the $i^{th}$ piece of first information and a type of a federated learning model of the $k^{th}$ subnode. $1 \leq i \leq I$, and i is a positive integer. In FIG. 5, the $k^{th}$ subnode may be the subnode 1, the subnode 2, or the subnode 3.

The following first describes in detail a type of an $i^{th}$ federated learning model of the $k^{th}$ subnode.

In this disclosure, the type of the $i^{th}$ federated learning model of the $k^{th}$ subnode corresponds to a first value or a second value. The model type corresponding to the first value may indicate that at least two of the plurality of subnodes correspond to a same federated learning model. The same federated learning model may also be referred to as a global model or another model name. This is not limited in this disclosure. When the type of the $i^{th}$ federated learning model of the $k^{th}$ subnode corresponds to the first value, it may indicate that the $i^{th}$ federated learning model of the $k^{th}$ subnode is the same as an $i^{th}$ federated learning model of at least one subnode other than the $k^{th}$ subnode in the plurality of subnodes. The type of the $i^{th}$ federated learning model of the $k^{th}$ subnode corresponds to the first value, and may also be described as that the type of the $i^{th}$ federated learning model of the $k^{th}$ subnode is the global model type.

The model type corresponding to the second value indicates a federated learning model that is for a single subnode and that is different from a federated learning model of another subnode in the plurality of subnodes. The federated learning model different from the federated learning model of the another subnode may also be referred to as a personalized model or another model name that can be distinguished from the foregoing global model. This is not limited in this disclosure. When the type of the $i^{th}$ federated learning model of the $k^{th}$ subnode corresponds to the second value, it may indicate that the $i^{th}$ federated learning model of the $k^{th}$ subnode is different from the $i^{th}$ federated learning model of the subnode other than the $k^{th}$ subnode in the plurality of subnodes. The type of the $i^{th}$ federated learning model of the $k^{th}$ subnode corresponds to the second value, and may also be described as that the type of the $i^{th}$ federated learning model of the $k^{th}$ subnode is the personalized model type.

Optionally, when i is a positive integer ranging from 1 to I, the central node determines that the type of the $i^{th}$ federated learning model of the $k^{th}$ subnode corresponds to the first value or the second value. Alternatively, the central node may determine whether a type of the $1^{st}$ federated learning model corresponding to the $k^{th}$ subnode corresponds to the first value or the second value. When a value of i is a positive integer ranging from 2 to I, the $i^{th}$ federated learning model of the $k^{th}$ subnode is consistent with a type of an $(i-1)^{th}$ federated learning model of the $k^{th}$ subnode by default. Alternatively, for some rounds of the I times, the central node may determine, in each round of the some rounds, that the federated learning model corresponding to the $k^{th}$ subnode corresponds to the first value or the second value, and for other rounds, by default, a type of a current federated learning model of the $k^{th}$ subnode is consistent with a type of a previous federated learning model of the $k^{th}$ subnode, or a federated learning model of the $k^{th}$ subnode corresponds to the first value or the second value.

The foregoing some rounds may be periodic, or may be continuous, or may be dynamically triggered by a federated learning management node or a subnode. For example, for some rounds in the I times, the central node determines a type of a federated learning model of a subnode, and a type of a federated learning model of another round is the same as a type of a previous federated learning model by default, or when the remaining rounds include the first round, the type of the federated learning model of the first round corresponds to the first value by default. A possible value of i corresponds to one or more rounds in the foregoing part of rounds, and a value of i is a number of a corresponding round in the I times. For example, when I is 10, some rounds are periodic, and numbers of the some rounds include 1, 3, 5, 7, and 9, a value of i is one or more of 1, 3, 5, 7, and 9; or the some rounds are continuous, and numbers of the some rounds include positive integers between $\dfrac{1+I}{2}$ and I. When I is 10, numbers of some rounds include 6, 7, 8, 9, and 10, and a value of i may be one or more of 6, 7, 8, 9, and 10.

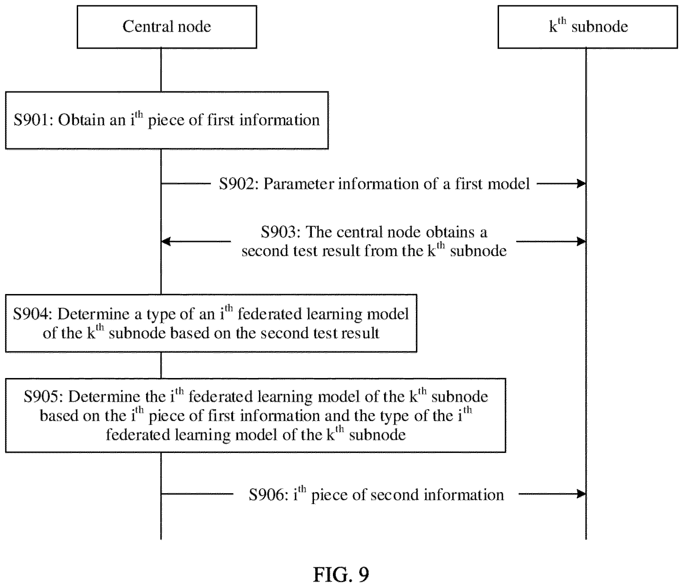

For the foregoing manner in which the central node determines the type of the federated learning model of the $k^{th}$ subnode, refer to the following manner for understanding: The central node may determine, by the central node, the first value or the second value corresponding to the federated learning model of the $k^{th}$ subnode; or the central node may determine a type of the federated learning model in the current training with reference to performance of the federated learning model obtained through historical training. For example, when i is greater than 1, the central node may determine the type of the $i^{th}$ federated learning model of the $k^{th}$ subnode based on performance of the $(i-1)^{th}$ federated learning model of the $k^{th}$ subnode. Specifically, in the solutions corresponding to FIG. 7 and FIG. 9, how the central node determines the type of the current federated learning model with reference to the performance of the historical federated learning model is described in detail.

For example, the federated learning model is trained in an $i^{th}$ round. When the $k^{th}$ subnode is any one of the plurality of subnodes, the type of the $i^{th}$ federated learning model of the $k^{th}$ subnode is the same as or different from a type of an $i^{th}$ federated learning model of at least one subnode other than the $k^{th}$ subnode in the plurality of subnodes. Alternatively, it may be understood that the $i^{th}$ federated learning model of the $k^{th}$ subnode is the same as or different from an $i^{th}$ federated learning model of at least one subnode other than the $k^{th}$ subnode in the plurality of subnodes.

Further, the following describes in detail a solution in which the central node determines the $i^{th}$ federated learning model of the $k^{th}$ subnode.

(1) When the type of the $i^{th}$ federated learning model of the $k^{th}$ subnode corresponds to the first value, the central node may determine the $i^{th}$ federated learning model of the $k^{th}$ subnode based on the $i^{th}$ piece of first information and a weight corresponding to the $i^{th}$ local model of each of the plurality of subnodes.

In an optional implementation, with reference to S22, the plurality of subnodes report, to the central node, model parameters of the local models obtained through training by the plurality of subnodes.

For example, $\alpha_k^i$ indicates a weight corresponding to an $i^{th}$ local model of the $k^{th}$ subnode, and $M_k^i$ indicates all model parameters of the $i^{th}$ local model of the $k^{th}$ subnode. When the $k^{th}$ subnode is any one of the plurality of subnodes, when the type of an $i^{th}$ federated learning model of the $k^{th}$ subnode corresponds to the first value, the central node may determine the $i^{th}$ federated learning model of the $k^{th}$ subnode according to the following formula:

$$M_0^i = \sum_{k=1}^{K} \alpha_k^i M_k^i$$, where $M_0^i$ indicates all model parameters of the $i^{th}$ federated learning model of the $k^{th}$ subnode. $\alpha_k^i$ is a weight of the $i^{th}$ local model of the $k^{th}$ subnode, and $\alpha_k^i$ may be determined by the central node, or may be determined by auxiliary information reported by a plurality of subnodes. For example, $\alpha_k^i = \frac{n_k}{\sum_{k=1}^{K} n_k}$, where $n_k$ indicates

a quantity of samples of local data collected by the $k^{th}$ subnode, and $M_k^i$ indicates all model parameters of the $i^{th}$ local model of the $k^{th}$ subnode.

For example, a corresponding subnode divides a model parameter of a local model of the subnode into a plurality of combinations and reports the combinations to the central node. It is assumed that the subnode reports a model parameter of a global layer of the local model and a model parameter of a personalized layer to the central node. When the $k^{th}$ subnode is any one of the plurality of subnodes, and the type of the $i^{th}$ federated learning model of the $k^{th}$ subnode corresponds to the first value, the central node may determine the $i^{th}$ federated learning model of the $k^{th}$ subnode in the following manner: The central node performs weighting on model parameters of global layers of $i^{th}$ local models of a plurality of subnodes to obtain parameter information of a global layer of an $i^{th}$ federated learning model of a $k^{th}$ subnode, and the central node performs weighting on model parameters of personalized layers of $i^{th}$ local models of a plurality of subnodes to obtain parameter information $Q_0^i = \sum_{k=1}^{K} \alpha_{z_k}^i S_{z_k}^i$ of a personalized layer of an $i^{th}$ federated learning model of the $k^{th}$ subnode, where $\alpha_{z_k}^i$ indicates a weight corresponding to a personalized layer of an $i^{th}$ local model trained by the $k^{th}$ subnode, and $S_{z_k}^i$ indicates a model parameter of the personalized layer of the $i^{th}$ local model of the $k^{th}$ subnode. In this way, the central node may determine the $i^{th}$ federated learning model of the $k^{th}$ subnode with reference to the model parameter of the global layer and the model parameter of the personalized layer.

A value of $\alpha_{z_k}^i$ may be determined by the central node, or may be determined by auxiliary information reported by a plurality of subnodes, for example, $\alpha_{z_k} = \frac{n_{z_k}}{\sum_{k=1}^{K} n_{z_k}}$, where $n_{z_k}$ indicates a quantity of samples of local data collected by the subnode with the $k^{th}$ order. In another optional implementation, with reference to S22, the plurality of subnodes report gradients of the local models obtained through training to the central node.

For example, when the $k^{th}$ subnode is any one of the plurality of subnodes, when the type of the $i^{th}$ federated learning model of the $k^{th}$ subnode corresponds to the first value, the central node may determine an $i^{th}$ federated learning model of the $k^{th}$ subnode according to the following formula: $M_0^i = M_0^{i-1} + \Delta M_0^i$; where $\Delta M_0^i = \sum_{k=1}^{K} \alpha_k^i \Delta M_k^i$

$\alpha_k^i$, may be understood with reference to the foregoing definition, and details are not described herein again in this disclosure; and $\Delta M_0^i$ indicates a gradient of the i$^{th}$ federated learning model of the k$^{th}$ subnode; $\Delta M_k^i$ indicates a gradient of the i$^{th}$ local model of the $k^{th}$ subnode.

For example, the corresponding subnode reports the model parameter of the global layer of the local model and the gradient of the personalized layer to the central node. When the k$^{th}$ subnode is any one of the plurality of subnodes, and the type of the i$^{th}$ federated learning model of the k$^{th}$ subnode corresponds to the first value, the central node may determine the i$^{th}$ federated learning model of the k$^{th}$ subnode in the following manner: The central node performs weighting on model parameters of global layers of i$^{th}$ local models of a plurality of subnodes to obtain a model parameter of a global layer of the i$^{th}$ federated learning model of the k$^{th}$ subnode, and the central node performs weighting on a gradient of a personalized layer of the i$^{th}$ local model of the k$^{th}$ subnode to obtain a gradient $\Delta Q_0^i = \sum_{k=1}^{K} \alpha_{z_k}^i \Delta S_{z_k}^i$ of the personalized layer of the i$^{th}$ federated learning model of the k$^{th}$ subnode, where $\alpha_{z_k}^i$ indicates a weight corresponding to the personalized layer of the i$^{th}$ local model trained by the k$^{th}$ subnode, and a value of $\alpha_{z_k}^i$ may be understood with reference to the foregoing definition. Details are not described again in this disclosure. $\Delta S_{z_k}^i$ indicates a gradient of the personalized layer of the i$^{th}$ local model of the k$^{th}$ subnode. The central node may add the gradient $\Delta Q_0^i$ of the personalized layer of the i$^{th}$ federated learning model of the k$^{th}$ subnode and the model parameter $Q_0^{i-1}$ of the personalized layer of the (i-1)$^{th}$ federated learning model of the k$^{th}$ subnode, to obtain the model parameter of the personalized layer of the i$^{th}$ federated learning model of the k$^{th}$ subnode $Q_0^i = Q_0^{i-1} + \Delta Q_0^i$. In this way, the central node may determine the i$^{th}$ federated learning model of the k$^{th}$ subnode with reference to the model parameter of the global layer and the model parameter of the personalized layer.

In addition, optionally, it is assumed that in the i$^{th}$ round, a type of an i$^{th}$ federated learning model of a first group of subnodes in the plurality of subnodes corresponds to the first value, the central node may further configure that $\alpha_{z_k}^i$ corresponding to other subnodes in the plurality of subnodes other than the first group of subnodes is less than $\alpha_{z_k}^i$ corresponding to the first group of subnodes, or for example, the central node may further configure that $\alpha_{z_k}^i$ corresponding to other subnodes in the plurality of subnodes other than the first group of subnodes is 0. Optionally, a quantity of subnodes included in the first group of subnodes may be denoted as U, and U may be a positive integer from 1 to K. When U is greater than 1, i$^{th}$ federated learning models of all subnodes in the first group of subnodes are the same.

(2) When the type of the i$^{th}$ federated learning model of the k$^{th}$ subnode corresponds to the second value, the central node may determine the i$^{th}$ federated learning model of the k$^{th}$ subnode based on the i$^{th}$ piece of first information and a similarity between the i$^{th}$ local model of the k$^{th}$ subnode and the i$^{th}$ local model of each of the plurality of subnodes.

In an optional implementation, with reference to S22, the plurality of subnodes report, to the central node, model parameters of the local models obtained through training by the plurality of subnodes.

For example, it is assumed that a type of an i$^{th}$ federated learning model of a p$^{th}$ subnode in the plurality of subnodes corresponds to the second value, the central node may determine the i$^{th}$ federated learning model of the p$^{th}$ subnode according to the following formula: $P_p^i = \sum_{k=1}^{K} \beta_{pk}^i M_k^i$, where $P_p^i$ indicates all model parameters of the i$^{th}$ federated learning model of the p$^{th}$ subnode. A value of p may be a positive integer from 1 to K, and k is a positive integer from 1 to K. Optionally, in the formula, p may be equal to k. $\beta_{pk}^i$ indicates a similarity between an i$^{th}$ local model of the p$^{th}$ subnode and an i$^{th}$ local model of any one of the K subnodes k, and a larger similarity indicates a larger value

of $\beta_{\text{pk}}^{\text{i}}$. Specifically, the value of $\beta_{pk}^{i}$ may be determined based on a cosine similarity, a Euclidean distance, and the like between model parameters of local models of the pth subnode and the kth subnode, or the value of $\beta_{\text{pk}}^{\text{i}}$ is determined based on the cosine similarity, the Euclidean distance, and the like between output results of the two local models after the central node inputs same test data to the local model of the pth subnode and the local model of the kth subnode. $M_{k}^{i}$ indicates all model parameters of the ith local model of the kth subnode.

For example, a corresponding subnode divides a model parameter of a local model of the subnode into a plurality of combinations and reports the combinations to the central node. It is assumed that the subnode reports a model parameter of a global layer of the local model and a model parameter of a personalized layer to the central node. It is assumed that the type of the ith federated learning model of the pth subnode in the plurality of subnodes corresponds to the second value. The central node may determine the ith federated learning model of the pth subnode in the following manner based on parameter information of the ith local models of the plurality of subnodes: The central node performs weighting on model parameters of global layers of ith local models of a plurality of subnodes to obtain parameter information of a global layer of the ith federated learning model of the pth subnode. The central node performs weighting based on the similarity between the model parameter of the personalized layer of the ith local model of any subnode k in the K subnodes and the model parameter of the personalized layer of the ith federated learning model of the pth subnode, to obtain parameter information $Q_p^i = \sum_{\text{k}=1}^{\text{K}} \beta_{\text{pk}}^i * S_p^i$ of the personalized layer of the ith federated learning model of the pth subnode. A larger similarity indicates a larger weight of parameter information of a personalized layer of a corresponding subnode. For definitions and values of $\beta_{\text{pk}}^{\text{i}}$, p, and k, refer to the definitions in the foregoing examples.

Details are not described herein again in this disclosure. $S_p^i$ indicates the model parameter of the personalized layer of the ith local model of the pth subnode.

In this way, the central node may determine the first model with reference to the model parameter of the global layer of the first model and the model parameter of the personalized layer.

In another optional implementation, with reference to S22, the plurality of subnodes report gradients of the local models obtained through training to the central node.

For example, it is assumed that a type of an ith federated learning model of a pth subnode in the plurality of subnodes corresponds to the second value, the central node may determine the ith federated learning model of the pth subnode according to the following formula: $P_p^i = \sum_{k=1}^K \beta_{pk}^i (P_p^{i-1} + \Delta P_k^i)$, where $P_p^{i-1}$ indicates all model parameters of an (i-1)th federated learning model of the pth subnode, $\Delta P_p^i$ indicates a gradient of an ith federated learning model of the pth subnode, and p, k, K, and $\beta_{pk}^i$. For understanding, refer to the foregoing definitions. Details are not described herein again in this disclosure.

For example, the corresponding subnode reports the model parameter of the global layer of the local model and the gradient of the personalized layer to the central node. It is assumed that the type of the ith federated learning model of the pth subnode in the plurality of subnodes corresponds to the second value, and the central node may determine the ith federated learning model of the pth subnode in the following manner: The central node performs weighting on model parameters of global layers of ith local models of a plurality of subnodes to obtain a model parameter of a global layer of the ith federated learning model of the pth subnode, the central node performs weighting on a gradient of a personalized layer of the ith local model of the pth subnode to obtain a model parameter

$Q_p^i = \sum_{k=1}^K \beta_{zpk}^i (Q_p^{i-1} + \Delta Q_p^i)$ of the personalized layer of the ith federated learning model of the pth subnode,

where $\beta_{zpk}^i$ indicates a similarity between a personalized layer of an ith local model of the pth subnode and a personalized layer of the ith local model of the kth subnode, and $\Delta S_{z_k}^i$ indicates a gradient of a personalized layer of the ith local model of the $k^{th}$ subnode. In this way, the central node may determine the $i^{th}$ federated learning model of the $p^{th}$ subnode with reference to the model parameter of the global layer and the model parameter of the personalized layer.

In addition, it may be further understood that, when a type of an $i^{th}$ federated learning model of a second group of subnodes in the plurality of subnodes corresponds to the second value, the $p^{th}$ subnode may be any one of the second group of subnodes. Alternatively, a quantity of subnodes included in the second group of subnodes is denoted as P, and in the second group of subnodes, p is any positive integer from 1 to P. $1 \leq P \leq K$.

In conclusion, for each time of the I times of training the federated learning model, federated learning models of the plurality of subnodes obtained through training may meet one of the following three results. For example, the following three results are described by using the $i^{th}$ time in the I times as an example.

Result 1: Types of $i^{th}$ federated learning models of the plurality of subnodes all correspond to the first value. In the result, the quantity U of subnodes included in the first group of subnodes in the foregoing example is equal to K, and the $i^{th}$ federated learning models of the plurality of subnodes are the same.

Result 2: Types of $i^{th}$ federated learning models of the plurality of subnodes all correspond to the second value. In the result, the quantity P of subnodes included in the second group of subnodes in the foregoing example is equal to K, and the $i^{th}$ federated learning models of the plurality of subnodes are different.

Result 3: Types of $i^{th}$ federated learning models of the first group of subnodes in the plurality of subnodes correspond to the first value, and types of $i^{th}$ federated learning models of the second group of subnodes correspond to the second value. In the result, the quantity U of subnodes included in the first group of subnodes in the foregoing example is less than K, and the quantity P of subnodes included in the second group of subnodes is less than K, where K=U+P. $i^{th}$ federated learning models of all subnodes in the second group of subnodes are different, and are different from $i^{th}$ federated learning models of all subnodes in the first group of subnodes. When U is greater than 1, the $i^{th}$ federated learning models of all the subnodes in the first group of subnodes are the same. In addition, corresponding to the solution in which the federated learning model is divided into the global layer and the personalized layer in the foregoing example, the $i^{th}$ federated learning model may be represented by a first part of parameter information (for example, parameter information of the global layer) and a second part of parameter information (for example, a personalized layer parameter). First parts of parameter information of $i^{th}$ federated learning models of all of the plurality of subnodes are the same. Second parts of parameter information of $i^{th}$ federated learning models of all the subnodes in the second group of subnodes are different, and are different from second parts of parameter information of the $i^{th}$ federated learning models of all the subnodes in the first group of subnodes. When U is greater than 1, the $i^{th}$ federated learning models of all the subnodes in the first group of subnodes are the same.

S24: The central node sends, to each subnode, information indicating a corresponding federated learning model.

Specifically, an $i^{th}$ time in the foregoing I times is used as an example. The central node may send an $i^{th}$ piece of second information, and the $i^{th}$ piece of second information indicates the $i^{th}$ federated learning model of each of the plurality of subnodes. For example, the $i^{th}$ piece of second information includes information indicating the $i^{th}$ federated learning model of each subnode, and the information indicating an $i^{th}$ federated learning model of one subnode may be parameter information of the $i^{th}$ federated learning model of the subnode. Parameter information of a federated learning model of a subnode may include a model parameter of the federated learning model. Alternatively, a difference between parameter information of a federated learning model trained for the subnode this time and parameter information of a federated learning model trained last time may be included. The difference may also be described as a gradient of a model parameter of the federated learning model trained this time, or briefly referred to as the gradient of the federated learning model trained this time. $1 \leq i \leq I$, and i is a positive integer.

With reference to S23, at any time of the I times, if a type of a federated learning model of a subnode corresponds to the first value or the second value, when the type of the federated learning model corresponds to the first value, parameter information of the federated learning model may be understood with reference to descriptions in (1) in S23; and when the type of the federated learning model corresponds to the second value, parameter information of the federated learning model may be understood with reference to descriptions in (2) in S23. Details are not described herein again in this disclosure.

When the type of the federated learning model corresponds to the first value, the central node may send the information used for the federated learning model in a broadcast or multicast manner. When the type of the federated learning model corresponds to the second value, the central node may send the information used for the federated learning model to a corresponding subnode in a unicast manner. The result 3 corresponding to the federated learning models of the plurality of subnodes trained for the $i^{th}$ time described in S23 is used as an example as follows.

In an optional manner, the federated learning model is not divided into the global layer and the personalized layer, and the central node may send the $i^{th}$ piece of second information according to the following steps: sending first indication information to the first group of subnodes in a broadcast or multicast manner, where the first indication information indicates the $i^{th}$ federated learning model of each subnode in the first group of subnodes; and sending second indication information to a $p^{th}$ subnode in the second group of subnodes in a unicast manner, where the second indication information indicates an $i^{th}$ federated learning model of the $p^{th}$ subnode.

In another optional manner, the federated learning model is divided into the global layer and the personalized layer. The $i^{th}$ federated learning model may be represented by a first part of parameter information (for example, parameter information of the global layer) and a second part of parameter information (for example, a personalized layer parameter). That the central node may send the $i^{th}$ piece of second information according to the following steps: sending the first part of parameter information of the $i^{th}$ federated learning model to the plurality of subnodes in a broadcast or multicast manner; sending the second part of parameter information of the $i^{th}$ federated learning model of each subnode in the first group of subnodes to the first group of subnodes in a broadcast or multicast manner; and sending a second part of parameter information of an $i^{th}$ federated learning model of a $p^{th}$ subnode to the $p^{th}$ subnode in the second group of subnodes in a unicast manner, where p is any positive integer from 1 to P, and P is a quantity of subnodes included in the second group of subnodes.

A resource used by the central node to send information through broadcast or multicast may be a resource used by the central node to send the second model in S501, or a resource used by the central node to send information through broadcast or multicast may be a resource reconfigured by the central node or the federated learning management node. Similarly, the resource used by the central node to send information through unicast may be a resource configured by the central node or the federated learning management node. The broadcast or multicast resource and the unicast resource may be different, partially overlapped, or the same. This is not limited in this disclosure.

In addition, the central node may further send auxiliary information. The auxiliary information may indicate, to each subnode, whether a type of the federated learning model sent by the central node to each subnode corresponds to the first value or the second value. For example, the first value is 1, and the second value is 0; or the first value is 0, and the second value is 1; or the first value indicates a global type, and the second value indicates a personalized type. The auxiliary information may further include a related parameter used to assist the subnode to train the local model, for example, a loss function available for training the local model.

Further, with reference to S23, it is understood that the $k^{th}$ subnode indicates any one of the plurality of subnodes. When a value of i is a positive integer ranging from 1 to I-1, the $k^{th}$ subnode obtains the parameter information of the $i^{th}$ federated learning model, and may determine an $(i+1)^{th}$ local model of the $k^{th}$ subnode based on the parameter information of the $i^{th}$ federated learning model. Alternatively, it may be understood that when i is greater than 1, parameter information of an $(i-1)^{th}$ federated learning model of the $k^{th}$ subnode is used to determine the $i^{th}$ local model of the $k^{th}$ subnode.

Optionally, when i is greater than 1, a corresponding loss function used when the $k^{th}$ subnode trains the $i^{th}$ local model is related to local data collected by the $k^{th}$ subnode, and may also be determined by the type of the $(i-1)^{th}$ federated learning model of the $k^{th}$ subnode.

For a case in which the type of the $(i-1)^{th}$ federated learning model of the $k^{th}$ subnode corresponds to the first value, the loss function is mainly related to a local dataset collected by the $k^{th}$ subnode. For example, an MSE loss function may be applied to the local model training by the $k^{th}$ subnode, and is denoted as

$$LOSS = \frac{1}{n_k}\sum_{l=1}^{l=n_k}\left(y_{k,l} - \bar{y}_{k,l}\right)^2$$

, where $n_k$ is a quantity of samples of the local data collected by the $k^{th}$ subnode, $y_{k,l}$ is an output of the $l^{th}$ sample, and $\bar{y}_{k,l}$ is a label of the $l^{th}$ sample, and $l$ is a positive integer from 1 to $n_k$,

When the type of the $(i-1)^{th}$ federated learning model of the $k^{th}$ subnode corresponds to the second value, a part of the loss function of the local model trained by the $k^{th}$ subnode is related to local data collected by the $k^{th}$ subnode, and the other part is related to a difference between the parameter information of the trained local model and the parameter information of the $(i-1)^{th}$ federated learning model. The difference may be represented by parameters such as a Euclidean distance and a Euclidean distance square.

For example, if the parameter information of the $(i-1)^{th}$ federated learning model of the $k^{th}$ subnode includes all model parameters of the model, the loss function of the $k^{th}$ subnode may be

$$LOSS = \frac{1}{n_k}\sum_{l=1}^{l=n_k}\left(y_{k,l} - \bar{y}_{k,l}\right)^2 + \mu\left\|M_k^i - P_k^{i-1}\right\|$$

, where a first item $\frac{1}{n_k}\sum_{l=1}^{l=n_k}\left(y_{k,l} - \bar{y}_{k,l}\right)^2$ is related to the local data, and definitions of $n_k$, $y_{k,l}$, $\bar{y}_{k,l}$, and $l$ may be understood with reference to the foregoing example. Details are not described herein again in this disclosure. A second item

$$\mu\left\|M_k^i - P_k^{i-1}\right\|$$

indicates a Euclidean distance between a model parameter of the trained local model and a received model parameter of the $(i-1)^{th}$ federated learning model, $M_k^i$ indicates a model parameter of the local model after the $i^{th}$ round of training, and $P_k^{i-1}$ indicates a model parameter of the $(i-1)^{th}$ federated learning model received at the $(i-$

1)th time. The parameter $\mu$ is a real number greater than 0, and is used to adjust a proportion of the second item loss. A value of $\mu$ may be determined by the subnode, or may be indicated by the central node to the subnode by using the auxiliary information.

For example, if the parameter information of the (i-1)th federated learning model of the kth subnode includes the model parameter of the global layer and the model parameter of the personalized layer of the model, the loss function

of the kth subnode may be $LOSS = \frac{1}{n_k}\sum_{l=1}^{l=n_k}\left(y_{k,l} - \bar{y}_{k,l}\right)^2 + \mu\left\|S_k^i - Q_k^{i-1}\right\|$, where the first item $\frac{1}{n_k}\sum_{l=1}^{l=n_k}\left(y_{k,l} - \bar{y}_{k,l}\right)^2$ related to the local data, and definitions of $n_k$, $y_{k,l}$, $\bar{y}_{k,l}$ and $l$ may be understood with reference to the foregoing example. Details are not described herein again in this disclosure. The second item $\mu\left\|M_k^i - P_k^{i-1}\right\|$

indicates a Euclidean distance between a model parameter of a trained local model and a received model parameter of an (i-1)th federated learning model, $S_k^i$ indicates a model parameter of a personalized layer of the local model after

the ith round of training, and $Q_k^{i-1}$ indicates a model parameter of a personalized layer of the second model received at the (i-1)th time, and a definition of the parameter $\mu$ with reference to the foregoing example. Details are not described herein again in this disclosure.

In conclusion, it may be understood that a value of I in S502 may be preconfigured, or a value of I is determined based on a model convergence condition, and an Ith federated learning model corresponding to the kth subnode meets the model convergence condition. The model convergence condition may be that performance of the Ith federated learning model of the kth subnode is higher than or equal to a preset performance threshold, or a difference between the Ith federated learning model of the kth subnode and an (I-1)th federated learning model of the kth subnode is less than a first threshold, or a difference between the Ith federated learning model of the kth subnode, the (I-1)th federated learning model of the kth subnode, and the (I-2)th federated learning model of the kth subnode is less than a first threshold, that is, the difference between the models tends to be stable.

In the foregoing solution provided in this disclosure, the central node may train a federated learning model corresponding to each subnode for each subnode, and provide a personalized model for a subnode whose data distribution is different from that of another subnode. This helps improve performance of local models of these subnodes, and can improve performance of the federated learning model.

The following further describes in detail a training manner of the federated learning model in this disclosure by using an example in which the central node needs to determine the ith federated learning model of the kth subnode with reference to performance of an (i-1)th federated learning model of the kth subnode. The value of i herein may be any one of the second time to the Ith time shown in FIG. 5, or may be one of some rounds described in S23.

FIG. 7 shows a communication method. The method mainly includes the following procedure.

S701: A central node obtains an ith piece of first information.

Specifically, details may be referred to the solution in S22 for implementation and are not described herein again in this disclosure.

S702: The central node obtains a first test result from a kth subnode.

The kth subnode is any one of a plurality of subnodes. The first test result indicates performance of an (i-1)th federated learning model of the kth subnode, and i is greater than 1.

Specifically, the kth subnode actively sends the first test result to the central node after the kth subnode may test the performance of the (i-1)th federated learning model of the kth subnode. Alternatively, the kth subnode may test the performance of the (i-1)th federated learning model under an indication of the central node. For example, the central node sends test signaling to the kth subnode; and the kth subnode may report the first test result to the central node after the kth subnode performs, based on the test signaling, the performance test. The test signaling herein indicates the kth subnode to test the performance of the (i-1)th federated learning model of the kth subnode.

Specifically, the kth subnode may test performance of a federated learning model in the following manner: The kth subnode uses local data as input data, inputs the local data into a to-be-tested federated learning model, obtains an output of the federated learning model, namely, a test result, and calculates a loss of the federated learning model by using the test result and a label of the local data. A larger loss indicates poorer performance of the (i-1)th federated learning model.

Optionally, the first test result may include at least one of the following parameters: a type of the (i-1)th federated learning model; information indicating whether the loss of the (i-1)th federated learning model is greater than a loss threshold. For example, the information may be a first value or a second value, where the first value indicates that the loss is greater than the loss threshold and indicates a large loss; and the second value indicates that the loss is less than the loss threshold and indicates a small loss; and the loss of the $(i-1)^{th}$ federated learning model.

In addition, optionally, the $k^{th}$ subnode can send the first test result including the loss of the $(i-1)^{th}$ federated learning model only when the loss of the $(i-1)^{th}$ federated learning model is large. When the loss of the $(i-1)^{th}$ federated learning model is small, the first test result does not include the loss of the $(i-1)^{th}$ federated learning model, but includes information indicating that the performance of the $(i-1)^{th}$ federated learning model meets a requirement; or when the loss of the $(i-1)^{th}$ federated learning model is small, the first test result is not sent, in this case, if the central node does not receive the first test result, it may be considered by default that the performance of the $(i-1)^{th}$ federated learning model meets a requirement. When the $k^{th}$ subnode does not receive the first test result or the first test result indicates that the loss of the $(i-1)^{th}$ federated learning model is small, it may be determined that a type of an $i^{th}$ federated learning model is consistent with the type of the $(i-1)^{th}$ federated learning model.

Specifically, the central node may send the test signaling to the $k^{th}$ subnode, and after the $k^{th}$ subnode performs a test based on the test signaling, the $k^{th}$ subnode reports the first test result to the central node. The following further describes some optional implementations of sending the test signaling by the central node.

In an optional implementation, the central node may periodically send the test signaling to the $k^{th}$ subnode, where the test signaling indicates the $k^{th}$ subnode to test performance of a federated learning model received most recently by the $k^{th}$ subnode. In addition, the test signaling may further include a loss threshold and a loss function type.

That the central node periodically sends the test signaling may be understood as follows: Some rounds described in S23 are periodic, and the central node sends the test signaling before training the federated learning model in these rounds. An $i^{th}$ round may be one of the some rounds. Based on this, that the central node obtains the first test result from the $k^{th}$ subnode may include: The central node sends the test signaling to the $k^{th}$ subnode in the $i^{th}$ round, where the test signaling may indicate the $k^{th}$ subnode to test the performance of the $(i-1)^{th}$ federated learning model of the $k^{th}$ subnode; the $k^{th}$ subnode obtains the performance of the $(i-1)^{th}$ federated learning model through testing based on the test signaling; and the $k^{th}$ subnode sends the first test result to the central node.

Alternatively, that the central node periodically sends the test signaling may be understood as: A test periodicity is configured when a resource for sending information by the central node to the $k^{th}$ subnode is configured, the $k^{th}$ subnode tests performance of a received federated learning model based on the test periodicity, and the testing includes a test operation on the performance of the $(i-1)^{th}$ federated learning model. Based on this, that the central node obtains the first test result from the $k^{th}$ subnode may include: When the $k^{th}$ subnode sends parameter information of an $i^{th}$ local model, the $k^{th}$ subnode further needs to send the first test result.

In another optional implementation, the central node may send the test signaling to the $k^{th}$ subnode under triggering of the $k^{th}$ subnode, where the test signaling indicates the $k^{th}$ subnode to test performance of a federated learning model received most recently by the $k^{th}$ subnode. For a manner of testing the performance of the federated learning model by the $k^{th}$ subnode, refer to the foregoing implementations for understanding. Details are not described herein again in this disclosure. In addition, the test signaling may further include a loss threshold and a loss function type.

Specifically, when the $k^{th}$ subnode determines that the performance of the $(i-1)^{th}$ federated learning model is abnormal, the $k^{th}$ subnode may report, to the central node, information indicating that the performance is abnormal. The $k^{th}$ subnode may input the local data into the $(i-1)^{th}$ federated learning model, and when a calculated loss is greater than a specified threshold, the $k^{th}$ subnode determines that the performance of the $(i-1)^{th}$ federated learning model is abnormal; or when the $k^{th}$ subnode may find, with reference to environment information or another interference factor, that the $(i-1)^{th}$ federated learning model is not applicable, the $k^{th}$ subnode may determine that the performance of the $(i-1)^{th}$ federated learning model is abnormal. For example, in a positioning, a subnode is a terminal device. If the terminal device moves from one environment to another environment, channel information of the two environments differs greatly, and results of positioning performed by using same federated learning models are poor. In this case, the terminal device finds that a sudden change occurs in the positioning result, and may determine that the performance of the federated learning model is abnormal.

The central node receives the foregoing information indicating the performance is abnormal, and sends the test signaling to the $k^{th}$ subnode in the $i^{th}$ round, where the test signaling may indicate the $k^{th}$ subnode to test the performance of the $(i-1)^{th}$ federated learning model of the $k^{th}$ subnode; the $k^{th}$ subnode obtains the performance of the $(i-1)^{th}$ federated learning model through testing based on the test signaling; and the $k^{th}$ subnode sends the first test result to the central node.

S703: The central node determines a type of an $i^{th}$ federated learning model of the $k^{th}$ subnode based on the first test result.

First, the central node may determine, based on the first test result, whether the type of the $i^{th}$ federated learning model of the $k^{th}$ subnode corresponds to the first value or the second value.

Specifically, if the first test result indicates that the performance of the $(i-1)^{th}$ federated learning model of the $k^{th}$ subnode is poor, the central node may determine that the type of the $i^{th}$ federated learning model of the $k^{th}$ subnode is different from the type of the (i-1)<sup>th</sup> federated learning model; or if the first test result indicates that the performance of the (i-1)<sup>th</sup> federated learning model of the k<sup>th</sup> subnode is good, the central node may determine that the type of the i<sup>th</sup> federated learning model of the k<sup>th</sup> subnode is the same as the type of the (i-1)<sup>th</sup> federated learning model. In addition, for a case in S702, if the k<sup>th</sup> subnode does not report the first test result, the central node may consider by default that the type of the i<sup>th</sup> federated learning model of the k<sup>th</sup> subnode is the same as the type of the (i-1)<sup>th</sup> federated learning model.

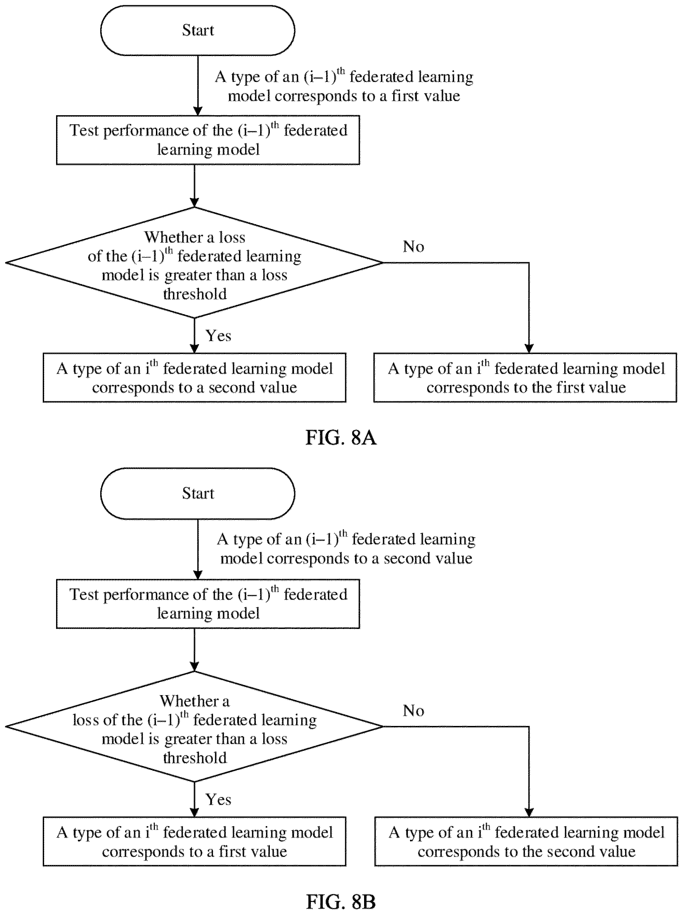

For example, FIG. 8A shows logic for determining a type of a federated learning model. When a type of an (i-1)<sup>th</sup> federated learning model corresponds to the first value, if the first test result indicates a small loss, that is, the performance of the (i-1)<sup>th</sup> federated learning model is good, the central node may determine that the type of the i<sup>th</sup> federated learning model corresponds to the first value. Alternatively, if the first test result indicates a large loss, that is, the performance of the (i-1)<sup>th</sup> federated learning model is poor, the central node may determine that the type of the i<sup>th</sup> federated learning model corresponds to the second value.

For example, FIG. 8B shows logic for determining a type of a federated learning model. When the type of the (i-1)<sup>th</sup> federated learning model corresponds to the second value, if the first test result indicates a small loss, that is, the performance of the (i-1)<sup>th</sup> federated learning model is good, the central node may determine that the type of the i<sup>th</sup> federated learning model corresponds to the second value. Alternatively, if the first test result indicates a large loss, that is, the performance of the (i-1)<sup>th</sup> federated learning model is poor, the central node may determine that the type of the i<sup>th</sup> federated learning model corresponds to the first value.

It may be understood that in the foregoing manner, when the central node determines that performance of (i-1)<sup>th</sup> federated learning models of any subnode is poor, the central node may adjust a type of an i<sup>th</sup> federated learning model of the any subnode. In addition, as another optional implementation, a threshold of a quantity of adjusted subnodes may also be specified. If the quantity of subnodes of (i-1)<sup>th</sup> federated learning models with poor performance exceeds the threshold, the type of the i<sup>th</sup> federated learning model may be preferentially adjusted to be different from the type of the (i-1)<sup>th</sup> federated learning model for a subnode with a large loss within the threshold.

S704: The central node may determine the i<sup>th</sup> federated learning model of the k<sup>th</sup> subnode based on the i<sup>th</sup> piece of first information and the type of the i<sup>th</sup> federated learning model of the k<sup>th</sup> subnode.

Specifically, refer to the solution described in S23 for implementation. Details are not described herein again in this disclosure.

S705: The central node sends an i<sup>th</sup> piece of second information.

For understanding of this step, refer to the solution described in S24. Details are not described herein again in this disclosure.

FIG. 9 shows a communication method. The method may be applied to a case in which a type of an (i-1)<sup>th</sup> federated learning model of a k<sup>th</sup> subnode corresponds to a second value. The method includes the following procedure.

S901: A central node obtains an i<sup>th</sup> piece of first information.

Specifically, refer to the solution in S22 for implementation. Details are not described herein again in this disclosure.

S902: The central node sends, to the k<sup>th</sup> subnode, information indicating a first model.

The first model is determined based on an (i-1)<sup>th</sup> piece of first information and a weight corresponding to an (i-1)<sup>th</sup> local model of each of a plurality of subnodes, and i is greater than 1. Specifically, when the k<sup>th</sup> subnode is any one of the plurality of subnodes, if a type of an (i-1)<sup>th</sup> federated learning model trained by the central node for at least two of the plurality of subnodes in an (i-1)<sup>th</sup> round corresponds to a first value, the central node may send parameter information of (i-1)<sup>th</sup> federated learning models of the at least two subnodes in S902. Alternatively, the central node may determine, based on the obtained (i-1)<sup>th</sup> piece of first information and the weight corresponding to the (i-1)<sup>th</sup> local model of each of the plurality of subnodes, parameter information of the first model to be sent in S902. The (i-1)<sup>th</sup> piece of first information includes parameter information of the (i-1)<sup>th</sup> local model of each of the plurality of subnodes.

S903: The central node obtains a second test result from the k<sup>th</sup> subnode.

The second test result indicates performance of the first model; or the second test result indicates performance of the first model and performance of the (i-1)<sup>th</sup> federated learning model of the k<sup>th</sup> subnode; or the second test result indicates performance of the (i-1)<sup>th</sup> federated learning model of the k<sup>th</sup> subnode.

Specifically, after the k<sup>th</sup> subnode may test the performance of the first model and/or the performance of the (i-1)<sup>th</sup> federated learning model of the k<sup>th</sup> subnode in S902, the k<sup>th</sup> subnode actively sends the second test result to the central node. Alternatively, the k<sup>th</sup> subnode may perform a performance test under an indication of the central node. For example, the central node sends test signaling to the k<sup>th</sup> subnode; and the k<sup>th</sup> subnode may report the second test result to the central node after the k<sup>th</sup> subnode performs, based on the test signaling, a performance test. The test signaling herein indicates the k<sup>th</sup> subnode to test the performance of the first model in S902 and/or the performance of the (i-1)<sup>th</sup> federated learning model of the k<sup>th</sup> subnode. For an optional implementation related to sending the test signaling by the central node, refer to S702. Details are not described herein again in this disclosure.

Specifically, refer to the solution described in S702. It may be understood that the k<sup>th</sup> subnode tests the performance of the first model or the (i-1)<sup>th</sup> federated model. Details are not described herein again in this disclosure. The following describes information included in the second test result by using an example.

In a first manner, the $k^{th}$ subnode tests the performance of the first model and the performance of the $(i-1)^{th}$ federated learning model based on a decision made by the $k^{th}$ subnode or based on the test signaling of the central node.

For example, the $k^{th}$ subnode may test the performance of the first model and the performance of the $(i-1)^{th}$ federated learning model, that is, calculate a loss of the first model and a loss of the $(i-1)^{th}$ federated learning model. Then, the $k^{th}$ subnode includes at least one piece of the following information in the second test result: the loss of the first model and the loss of the $(i-1)^{th}$ federated learning model; third indication information, where the third indication information indicates that the loss of the first model is greater than the loss of the $(i-1)^{th}$ federated learning model, or the third indication information indicates that the loss of the first model is less than the loss of the $(i-1)^{th}$ federated learning model; and fourth indication information, where the fourth indication information indicates a model type with a large loss or a small loss, and a difference between the loss of the first model and the loss of the $(i-1)^{th}$ federated learning model.

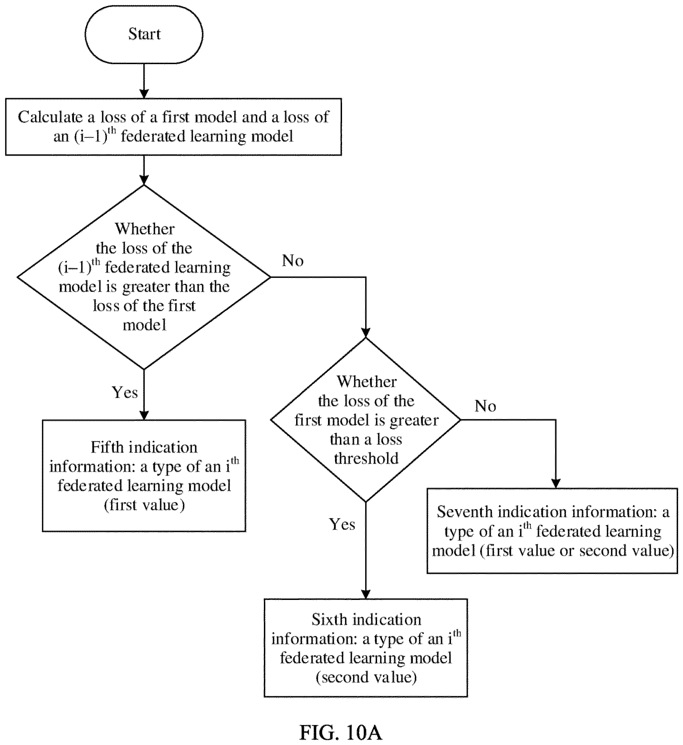

For example, as shown in FIG. 10A, after the $k^{th}$ subnode calculates the loss of the first model and the loss of the $(i-1)^{th}$ federated learning model, the $k^{th}$ subnode determines whether the loss of the $(i-1)^{th}$ federated learning model is greater than the loss of the first model. If yes, the $k^{th}$ subnode may include fifth indication information in the second test result. The fifth indication information may indicate that the performance of the first model is better than the performance of the $(i-1)^{th}$ federated learning model, and implicitly indicate that a type of an $i^{th}$ federated learning model corresponds to the first value. If no, the $k^{th}$ subnode continues to determine whether the loss of the first model is greater than a loss threshold. When the loss of the first model is greater than the loss threshold, the $k^{th}$ subnode may include sixth indication information in the second test result. The sixth indication information may indicate that the performance of the $(i-1)^{th}$ federated learning model is better than the performance of the first model, and implicitly indicate that a type of an $i^{th}$ federated learning model is the same as a type of the $(i-1)^{th}$ federated learning model. When the loss of the first model is less than or equal to a specified threshold, the $k^{th}$ subnode may include seventh indication information in the second test result. The seventh indication information may indicate that the performance of the $(i-1)^{th}$ federated learning model is better than that of the first model, but the loss of the first model is less than or equal to the loss threshold. The seventh indication information may implicitly indicate that a type of an $i^{th}$ federated learning model may correspond to the first value or the second value.

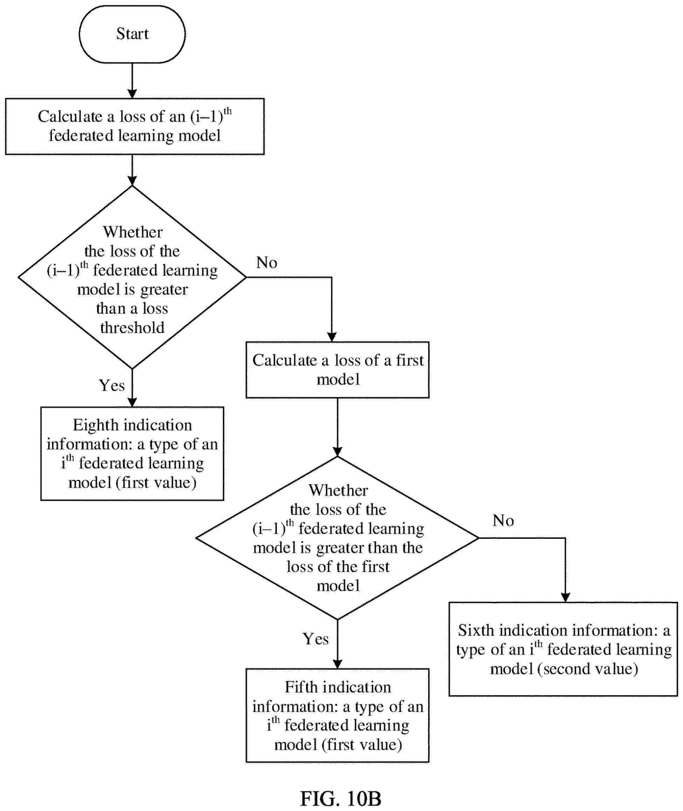

For example, as shown in FIG. 10B, the $k^{th}$ subnode may first calculate the loss of the $(i-1)^{th}$ federated learning model, and determine whether the loss of the $(i-1)^{th}$ federated learning model is greater than a loss threshold. If yes, the $k^{th}$ subnode may include eighth indication information in the second test result, where the eighth indication information may indicate that the loss of the $(i-1)^{th}$ federated learning model is greater than the loss threshold, and implicitly indicate that a type of an $i^{th}$ federated learning model corresponds to the first value. If no, the $k^{th}$ subnode continues to calculate the loss of the first model, and determines whether the loss of the $(i-1)^{th}$ federated learning model is greater than the loss of the first model. If yes, the $k^{th}$ subnode may include fifth indication information in the second test result, where the fifth indication information may indicate that the performance of the first model is better than the performance of the $(i-1)^{th}$ federated learning model, and implicitly indicate that a type of an $i^{th}$ federated learning model corresponds to the first value. If no, the $k^{th}$ subnode may include sixth indication information in the second test result. The sixth indication information may indicate that the performance of the $(i-1)^{th}$ federated learning model is better than the performance of the first model, and implicitly indicate that a type of an $i^{th}$ federated learning model is the same as a type of the $(i-1)^{th}$ federated learning model.

In addition, optionally, for the procedure shown in FIG. 10B, the central node can send the first model only when the loss of the $(i-1)^{th}$ federated learning model is less than or equal to the loss threshold. For example, after performing S901, the central node may first perform S903 to obtain the second test result. If the second test result obtained by the central node includes the eighth indication information, the central node may not send the first model, that is, after performing S901 and S903, the central node directly performs S904 to S906. For another example, after performing S901, the central node may first obtain a third test result. The third test result indicates that the loss of the $(i-1)^{th}$ federated learning model is less than or equal to the loss threshold. In this case, the central node may perform S902 to S906 based on the third test result. Such a design can reduce signaling overheads for sending the first model by the central node.

In a second manner, the $k^{th}$ subnode tests only the performance of the first model based on a decision made by the $k^{th}$ subnode or based on the test signaling of the central node. In this manner, the second test result may indicate the performance of the first model. For example, the second test result may include a loss of the first model, or information indicating whether a loss of the first model is greater than a loss threshold. The information may be a third value or a fourth value. The third value indicates that the loss is greater than the loss threshold, indicates that a large loss, and implicitly indicates that a type of an $i^{th}$ federated learning model is the same as a type of the $(i-1)^{th}$ federated learning model. The fourth value indicates that the loss is less than or equal to the loss threshold, indicates that a small loss, and implicitly indicates that a type of an $i^{th}$ federated learning model corresponds to the first value.

In a third manner, the $k^{th}$ subnode tests only the performance of the $(i-1)^{th}$ federated learning model based on a decision made by the $k^{th}$ subnode or based on the test signaling of the central node. In this manner, the second test result may indicate the performance of the (i-1)th federated learning model. For example, the second test result may include a loss of the (i-1)th federated learning model, or information indicating whether a loss of the (i-1)th federated learning model is greater than a loss threshold, where the information may be a fifth value or a sixth value. The fifth value indicates that the loss is greater than the loss threshold, indicates that a large loss, and implicitly indicates that a type of an ith federated learning model corresponds to the first value. The sixth value indicates that the loss is less than or equal to the loss threshold, indicates that a small loss, and implicitly indicates that a type of an ith federated learning model is the same as a type of the (i-1)th federated learning model.

S904: The central node determines a type of an ith federated learning model of the kth subnode based on the second test result.

Specifically, the central node may determine, based on the second test result, whether the type of the ith federated learning model of the kth subnode corresponds to the first value or the second value.

For example, with reference to the first manner in S903,

when the second test result includes the loss of the first model and the loss of the (i-1)th federated learning model, the central node may determine that a type of a model with a small loss is the type of the ith federated learning model; or when the second test result includes the third indication information, the type of the ith federated learning model of the kth subnode corresponds to the second value; or when the second test result includes the fourth indication information, and the difference is greater than a specified difference threshold, it is determined that a type of a model with a small loss is the type of the ith federated learning model; or when the difference is less than or equal to a specified difference threshold, it is determined that the type of the ith federated learning model corresponds to the first value or the second value; or

when the second test result includes the fifth indication information, the type of the ith federated learning model of the kth subnode corresponds to the first value; or when the second test result includes the sixth indication information, the type of the ith federated learning model of the kth subnode corresponds to the second value; or when the second test result includes the fifth indication information, it is determined that the type of the ith federated learning model corresponds to the first value or the second value; or when the second test result includes the sixth indication information, the type of the ith federated learning model of the kth subnode corresponds to the first value.

For example, with reference to the second manner of S903, when the central node determines, based on the second test result, that the loss of the first model is greater than the loss threshold, the central node determines that the type of the ith federated learning model of the kth subnode corresponds to the second value; or when the central node determines that the loss of the first model is less than or equal to the loss threshold, the central node determines that the type of the ith federated learning model of the kth subnode corresponds to the first value.

For example, with reference to the third manner of S903, when the central node determines, based on the second test result, that the loss of the (i-1)th federated learning model is greater than the loss threshold, the central node determines that the type of the ith federated learning model of the kth subnode corresponds to the first value; or when the central node determines that the loss of the (i-1)th federated learning model is less than or equal to the loss threshold, the central node determines that the type of the ith federated learning model of the kth subnode corresponds to the second value.

It may be understood that in the foregoing manner, when the central node determines that performance of an (i-1)th federated learning model of any subnode is poor, the central node may adjust a type of an ith federated learning model of the any subnode. In addition, as another optional implementation, a threshold of a quantity of adjusted subnodes may also be specified. If the quantity of subnodes of (i-1)th federated learning models with poor performance exceeds the threshold, the type of the ith federated learning model may be preferentially adjusted to be different from the type of the (i-1)th federated learning model for a subnode with a large loss within the threshold.

S905: The central node may determine the ith federated learning model of the kth subnode based on the ith piece of first information and the type of the ith federated learning model of the kth subnode.

Specifically, refer to the solution described in S23 for implementation. Details are not described herein again in this disclosure.

S906: The central node sends an ith piece of second information.

For understanding of this step, refer to the solution described in S24. Details are not described herein again in this disclosure.

In the solution in FIG. 7 or FIG. 9, a type of a federated learning model for current training is determined with reference to performance of a global model and/or a personalized model that are/is obtained through historical training, and a corresponding model is trained based on the type of the federated learning model, so that performance of a model can be improved.

In addition, this disclosure does not limit a plurality of subnodes participating in federated learning. The plurality of subnodes may be a fixed quantity of subnodes, or may be dynamically changed. For example, in training processes for I times, a new subnode is allowed to participate in the federated learning.

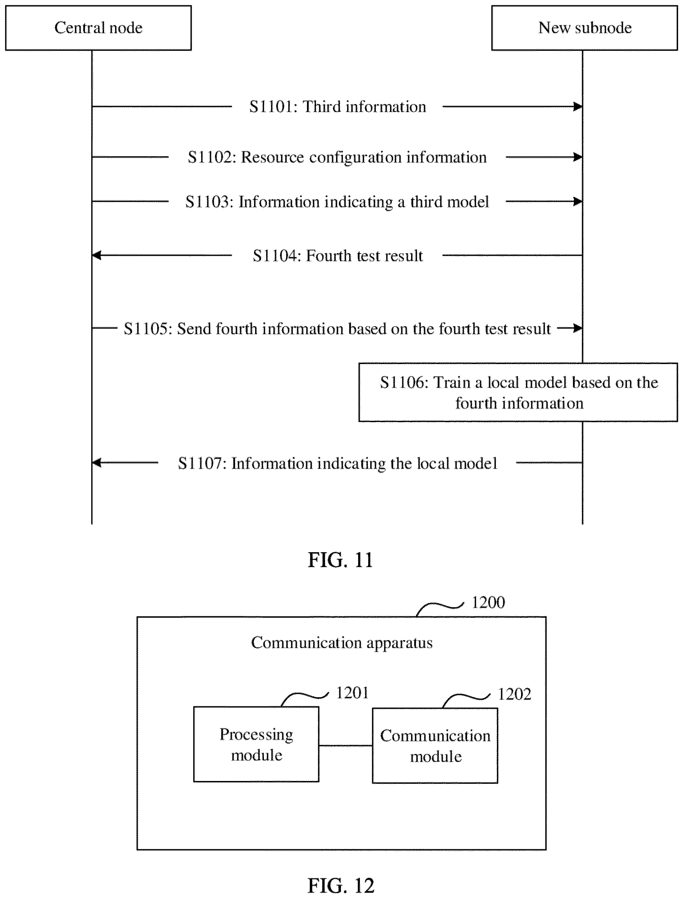

FIG. 11 shows a communication method. The method mainly includes the following procedure.

S1101: A new subnode sends third information to a central node, where the third information is used to request to participate in federated learning.

S 1102: The central node sends resource configuration information to the new subnode.

The resource configuration information is used to configure a resource used by the central node to send a third model. The third model may be understood, based on a local model of an existing subnode that participates in the federated learning, as a federated learning model whose type obtained through most recently training corresponds to a first value. Optionally, the resource configuration information is further used to configure, for the new subnode, a resource used by the new subnode to send parameter information of the local model.

Alternatively, a federated learning management node may configure the resource used by the central node to send the third model to the new subnode and a resource used by the new subnode to send parameter information of the local model.

S 1103: The central node sends, to the new subnode, information indicating the third model.

Specifically, the central node may send parameter information of the third model to the new subnode in a broadcast or multicast manner based on the resource configuration information in S1102. For the parameter information of the third model, refer to S501 for understanding. Details are not described herein again in this disclosure.

In addition, the central node may also indicate the new subnode to perform a performance test on the third model.

S1104: The new subnode sends a fourth test result to the central node, where the fourth test result indicates performance of the third model.

For the new subnode, the performance of the third model may be tested with reference to the solution in S702. Details are not described herein again in this disclosure. The fourth test result includes a loss of the third model, or information indicating whether a loss of the third model is greater than a loss threshold.

S1105: The central node sends fourth information to the new subnode based on the fourth test result.

In a manner, when the central node determines, based on the fourth test result, that the loss of the third model is greater than the loss threshold, the central node may determine that a type of a federated learning model suitable for the new subnode corresponds to a second value, that is, the new subnode is suitable for a federated learning model of a personalized type. In this case, the central node may include, in the fourth information, the following information: information indicating the new subnode to use the federated learning model of the personalized type; related auxiliary information for training the local model by the new subnode, for example, parameter information of an initial model (that is, the second model) used for training the local model; a current quantity of iterations for training the local model; a learning rate; a loss function; a batch size; and a parameter type (model parameter or gradient) of the reported local model.

The current quantity of iterations for training the local model is related to a quantity of iterations for training the local model on a remaining subnode that participates in the federated learning before the new subnode receives the fourth information. For example, in each round of the foregoing I times of training the federated learning model, the quantity of iterations for training the local model by the corresponding subnode is 20. If the new subnode has performed four rounds of training of the federated learning model before receiving the fourth information, in this case, the current quantity of iterations for training the local model by the new subnode is 80.

In another manner, when the central node determines, based on the fourth test result, that the loss of the third model is less than or equal to the loss threshold, the central node may determine that a type of a federated learning model suitable for the new subnode corresponds to the first value, that is, the new subnode is suitable for a federated learning model of a global type. In this case, the central node may include the following information in the fourth information: and related auxiliary information for training the local model based on the third model by the new subnode, for example, a quantity of iterations for training the local model in each round of training the federated learning model, a learning rate, a loss function, a batch size, and a parameter type (a model parameter or a gradient) of the reported local model.

In addition, subsequently, the central node sends a personalized model to the new subnode in a unicast manner, and a unicast resource may be configured by the central node or the federated learning management node. In the foregoing manner, related auxiliary information for training the local model by the new subnode may further include the configured unicast resource. Alternatively, the central node sends a global model to the new subnode in a broadcast or multicast manner. A broadcast resource or a multicast resource may be the resource allocated in S1103, or may be reconfigured by the central node or the federated learning management node.

S1106: The new subnode trains the local model based on the fourth information.

S1107: The new subnode sends, to the central node, information indicating the local model.

This step may be understood with reference to S21, and details are not described in this disclosure.

In this case, it may be considered that the new subnode has successfully participated in the federated learning. For a subsequent procedure, refer to one or more solutions in FIG. 5 to FIG. 10B. Details are not described herein again in this disclosure.

In the solution in FIG. 11, the newly added subnode is supported to use a model of a personalized type, so that a problem that performance of a newly added subnode in the federated learning is poor when the newly added subnode uses a model of a global type can be avoided. This can improve model performance.

Based on the same concept, refer to FIG. 12. This disclosure provides a communication apparatus 1200. The communication apparatus 1200 includes a processing module 1201 and a communication module 1202. The communication apparatus 1200 may be a $k^{th}$ subnode, or may be a communication apparatus that is used in a $k^{th}$ subnode or used together with the $k^{th}$ subnode, and can implement a communication method performed on a $k^{th}$ subnode side. Alternatively, the communication apparatus 1200 may be a central node, or may be a communication apparatus that is used in a central node or used together with the central node, and can implement a communication method performed on a central node side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, a device that is in the communication module and that is configured to implement a receiving function may be considered as a receiving unit. It should be understood that the communication module is configured to perform a sending operation and a receiving operation on the $k^{th}$ subnode side or the central node side in the foregoing method embodiments, and a device that is in the communication module and that is configured to implement a sending function is considered as a sending unit. In other words, the communication module includes the receiving unit and the sending unit.

When the communication apparatus 1200 is used in the central node, a receiving unit included in the communication module 1202 of the communication apparatus 1200 is configured to perform a receiving operation on the central node side, for example, receive information from the $k^{th}$ subnode. A sending unit included in the communication module 1202 is configured to perform a sending operation on the central node side, for example, send information to the $k^{th}$ subnode. When the communication apparatus 1200 is used in the $k^{th}$ subnode, the receiving unit included in the communication module 1202 of the communication apparatus 1200 is configured to perform a receiving operation on the $k^{th}$ subnode side, for example, receive information from the central node; and the sending unit included in the communication module 1202 of the communication apparatus 1200 is configured to perform a sending operation on the $k^{th}$ subnode side, for example, send information to the central node. When the communication apparatus 1200 is used in the central node, the receiving unit included in the communication module 1202 of the communication apparatus 1200 is configured to perform a receiving operation on the central node side, for example, receive information from the central node; and the sending unit included in the communication module 1202 of the communication apparatus 1200 is configured to perform a sending operation on the central node side, for example, send information to the central node.

In addition, it should be noted that, if the apparatus is implemented by using a chip/chip circuit, the communication module may be an input/output circuit and/or a communication interface, and performs an input operation (which corresponds to the foregoing receiving operation) and an output operation (which corresponds to the foregoing sending operation). The processing module is an integrated processor, a microprocessor, or an integrated circuit.

Division into the modules in this disclosure is an example, is only division into logical functions, and may be other division during actual implementation. In addition, functional modules in embodiments of this disclosure may be integrated into one processor, or may exist alone physically, or two or more modules may be integrated into one module. The integrated module may be implemented in a form of hardware, or may be implemented in a form of a software functional module.

Based on a same technical concept, this disclosure further provides a communication apparatus 1300. The communication apparatus 1300 may be a chip or a chip system. Optionally, in this disclosure, the chip system may include a chip, or may include a chip and another discrete device.

The communication apparatus 1300 may be configured to implement a function of any network element in the communication system shown in FIG. 1A, FIG. 3A and FIG. 3B. The communication apparatus 1300 may include at least one processor 1310. The processor 1310 is coupled to a memory. Optionally, the memory may be located in the apparatus, the memory may be integrated with the processor, or the memory may be located outside the apparatus. For example, the communication apparatus 1300 may further include at least one memory 1320. The memory 1320 stores a computer program, configuration information, a computer program or instructions, and/or data necessary for implementing any one of the foregoing embodiments. The processor 1310 may execute the computer program stored in the memory 1320, to complete the method in any one of the foregoing embodiments.

The communication apparatus 1300 may further include a communication interface 1330, and the communication apparatus 1300 may perform information exchange with another device through the communication interface 1330. For example, the communication interface 1330 may be a transceiver, a circuit, a bus, a module, a pin, or another type of communication interface. When the communication apparatus 1300 is a chip apparatus or a circuit, the communication interface 1330 in the communication apparatus 1300 may also be an input/output circuit, and may input information (or receive information) and output information (or send information). The processor is an integrated processor, a microprocessor, an integrated circuit, or a logic circuit. The processor may determine output information based on input information.

The coupling in this disclosure may be an indirect coupling or a communication connection between apparatuses, units, or modules in an electrical form, a mechanical form, or another form, and is used for information exchange between the apparatuses, the units, or the modules. The processor 1310 may cooperate with the memory 1320 and the communication interface 1330. A specific connection medium between the processor 1310, the memory 1320, and the communication interface 1330 is not limited in this disclosure.

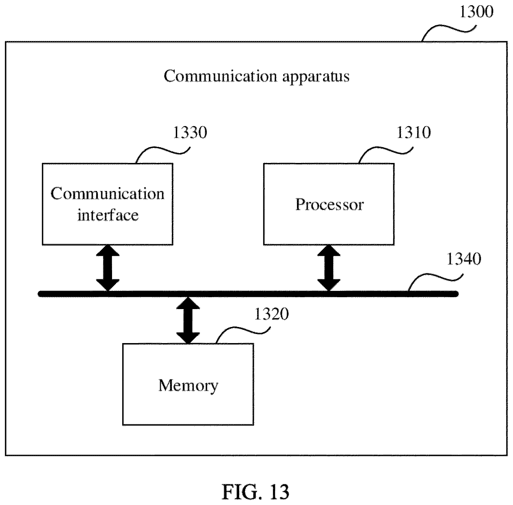

Optionally, with reference to FIG. 13, the processor 1310, the memory 1320, and the communication interface 1330 are connected to each other through a bus 1340. The bus 1340 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line indicates the bus in FIG. 13, but this does not mean that there is only one bus or only one type of bus.

In this disclosure, the processor may be a general-purpose processor, a digital signal processor, an application-specific integrated circuit, a field programmable gate array or another programmable logic device, a discrete gate or transistor logic device, or a discrete hardware assembly, and may implement or perform the methods, steps, and logical block diagrams disclosed in this disclosure. The general-purpose processor may be a microprocessor, any conventional processor, or the like. The steps of the method disclosed with reference to this disclosure may be directly performed by a hardware processor, or may be performed by a combination of hardware and software modules in the processor.

In this disclosure, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. The memory in this disclosure may alternatively be a circuit or any other apparatus that can implement a storage function, and is configured to store program instructions and/or data.

In a possible implementation, the communication apparatus 1300 may be used in a central node. Specifically, the communication apparatus 1300 may be the central node, or may be an apparatus that can support the central node and implement a function of the central node in any one of the foregoing embodiments. The memory 1320 stores a computer program, a computer program or instructions, and/or data necessary for implementing a function of the central node in any one of the foregoing embodiments. The processor 1310 may execute the computer program stored in the memory 1320, to complete the method performed by the central node in any one of the foregoing embodiments. Used in the central node, the communication interface in the communication apparatus 1300 may be configured to interact with a $k^{th}$ subnode, and send information to the $k^{th}$ subnode or receive information from the $k^{th}$ subnode.

In another possible implementation, the communication apparatus 1300 may be used in the $k^{th}$ subnode. Specifically, the communication apparatus 1300 may be the $k^{th}$ subnode, or may be an apparatus that can support the $k^{th}$ subnode and implement a function of the $k^{th}$ subnode in any one of the foregoing embodiments. The memory 1320 stores a computer program, a computer program or instruction, and/or data necessary for implementing a function of the $k^{th}$ subnode in any one of the foregoing embodiments. The processor 1310 may execute the computer program stored in the memory 1320, to complete the method performed by the $k^{th}$ subnode in any one of the foregoing embodiments. Used in the $k^{th}$ subnode, the communication interface in the communication apparatus 1300 may be configured to interact with the central node, and send information to the central node or receive information from the central node.

The communication apparatus 1300 provided in this embodiment may be used in the central node to complete the method performed by the central node, or may be used in the $k^{th}$ subnode to complete the method performed by the $k^{th}$ subnode. Therefore, for technical effect that can be achieved by the communication apparatus 1300, refer to the foregoing method embodiments. Details are not described herein again.

Based on the foregoing embodiments, this disclosure further provides a computer program. When the computer program is run on a computer, the computer is enabled to perform, from a perspective of a central node side or a $k^{th}$ subnode side, the communication method provided in the embodiments shown in FIG. 5 to FIG. 7, FIG. 8A and FIG. 8B, FIG. 9, FIG. 10A and FIG. 10B, and FIG. 11.

Based on the foregoing embodiments, this disclosure further provides a computer-readable storage medium. The computer-readable storage medium stores a computer program. When the computer program is executed by a computer, the computer is enabled to perform, from a perspective of a central node side or a $k^{th}$ subnode side, the communication method provided in the embodiments shown in FIG. 5 to FIG. 7, FIG. 8A and FIG. 8B, FIG. 9, FIG. 10A and FIG. 10B, and FIG. 11. The storage medium may be any usable medium that can be accessed by the computer. The following is used as an example but is not limited: The computer-readable medium may include a RAM, a read-only memory (read-only memory, ROM), an electrically erasable programmable read-only memory (electrically erasable programmable read-only memory, EEPROM), a CD-ROM or other optical disk storage, a magnetic disk storage medium or another magnetic storage device, or any other medium that can be used to carry or store expected program code in a form of instructions or a data structure and can be accessed by a computer.

Based on the foregoing embodiments, this disclosure provides a communication system, including a central node and a plurality of subnodes. The central node and the plurality of subnodes may implement the communication methods provided in the embodiments shown in FIG. 5 to FIG. 7, FIG. 8A and FIG. 8B, FIG. 9, FIG. 10A and FIG. 10B, and FIG. 11.

Based on the foregoing embodiments, this disclosure further provides a chip. The chip is configured to read a computer program stored in a memory, and implement, from a perspective of a central node side or a $k^{th}$ subnode side, the communication methods provided in the embodiments shown in FIG. 5 to FIG. 7, FIG. 8A and FIG. 8B, FIG. 9, FIG. 10A and FIG. 10B, and FIG. 11.

Based on the foregoing embodiments, this disclosure provides a chip system. The chip system includes a processor, configured to support a computer apparatus in implementing functions of a $k^{th}$ subnode or a central node in the embodiments shown in FIG. 5 to FIG. 7, FIG. 8A and FIG. 8B, FIG. 9, FIG. 10A and FIG. 10B, and FIG. 11. In a possible design, the chip system further includes a memory, and the memory is configured to store a program and data that are necessary for the computer apparatus. The chip system may include a chip, or may include a chip and another discrete device.

All or some of the technical solutions provided in this disclosure may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to this disclosure are all or partially generated. The computer may be a general-purpose computer, a dedicated computer, a computer network, a $k^{th}$ subnode, a central node, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this disclosure, when there is no logical conflict, embodiments may be mutually referenced. For example, methods and/or terms in the method embodiments may be mutually referenced. For example, functions and/or terms in the apparatus embodiments may be mutually referenced. For example, functions and/or terms between the apparatus embodiments and the method embodiments may be mutually referenced.

It is clearly that, a person skilled in the art can make various modifications and variations to this disclosure without departing from the scope of this disclosure. This disclosure is intended to cover these modifications and variations of this disclosure provided that they fall within the scope of protection defined by the following claims and their equivalent technologies.

**Claims**

1. A communication method, comprising:

    obtaining an $i^{th}$ piece of first information, wherein the $i^{th}$ piece of first information indicates an $i^{th}$ local model of each of a plurality of subnodes, and i is a positive integer;
    determining an $i^{th}$ federated learning model of a $k^{th}$ subnode based on the $i^{th}$ piece of first information and a type of the $i^{th}$ federated learning model of the $k^{th}$ subnode, wherein k is any positive integer from 1 to K, and K is a quantity of the plurality of subnodes; and when i is greater than 1, the type of the $i^{th}$ federated learning model of the $k^{th}$ subnode is determined based on a type or performance of an $(i-1)^{th}$ federated learning model of the $k^{th}$ subnode; and
    sending an $i^{th}$ piece of second information, wherein the $i^{th}$ piece of second information indicates an $i^{th}$ federated learning model of each of the plurality of subnodes.

2. The method according to claim 1, wherein the $i^{th}$ federated learning model of the $k^{th}$ subnode is the same as or different from an $i^{th}$ federated learning model of at least one subnode other than the $k^{th}$ subnode in the plurality of subnodes.

3. The method according to claim 1 or 2, further comprising:

obtaining a first test result from the k$^{th}$ subnode, wherein the first test result indicates the performance of the (i-1)$^{th}$ federated learning model of the k$^{th}$ subnode, and i is greater than 1; and
determining the type of the i$^{th}$ federated learning model of the k$^{th}$ subnode based on the first test result.

4. The method according to claim 1 or 2, further comprising:

sending, to the k$^{th}$ subnode, information indicating a first model, wherein the first model is determined based on an (i-1)$^{th}$ piece of first information and a weight corresponding to an (i-1)$^{th}$ local model of each of the plurality of subnodes, and i is greater than 1;
obtaining a second test result from the k$^{th}$ subnode, wherein the second test result indicates performance of the first model, or the second test result indicates performance of the first model and the performance of the (i-1)$^{th}$ federated learning model of the k$^{th}$ subnode; and
determining the type of the i$^{th}$ federated learning model of the k$^{th}$ subnode based on the second test result.

5. The method according to any one of claims 1 to 4, wherein the determining an i$^{th}$ federated learning model of a k$^{th}$ subnode based on the i$^{th}$ piece of first information and a type of the i$^{th}$ federated learning model of the k$^{th}$ subnode comprises:

when the type of the i$^{th}$ federated learning model of the k$^{th}$ subnode corresponds to a first value, determining the i$^{th}$ federated learning model of the k$^{th}$ subnode based on the i$^{th}$ piece of first information and a weight corresponding to the i$^{th}$ local model of each of the plurality of subnodes; or
when the type of the i$^{th}$ federated learning model of the k$^{th}$ subnode corresponds to a second value, determining the i$^{th}$ federated learning model of the k$^{th}$ subnode based on the i$^{th}$ piece of first information and a similarity between the i$^{th}$ local model of the k$^{th}$ subnode and the i$^{th}$ local model of each of the plurality of subnodes.

6. The method according to any one of claims 1 to 5, wherein the plurality of subnodes comprise a first group of subnodes and a second group of subnodes, i$^{th}$ federated learning models of all subnodes in the first group of subnodes are the same, and i$^{th}$ federated learning models of all subnodes in the second group of subnodes are different and are different from the i$^{th}$ federated learning models of all the subnodes in the first group of subnodes; and the sending an i$^{th}$ piece of second information comprises:

sending first indication information to the first group of subnodes in a broadcast or multicast manner, wherein the first indication information indicates the i$^{th}$ federated learning model of each subnode in the first group of subnodes; and
sending second indication information to a p$^{th}$ subnode in the second group of subnodes in a unicast manner, wherein the second indication information indicates an i$^{th}$ federated learning model of the p$^{th}$ subnode, p is any positive integer from 1 to P, and P is a quantity of subnodes comprised in the second group of subnodes.

7. The method according to any one of claims 1 to 4, wherein the i$^{th}$ federated learning model is represented by a first part of parameter information and a second part of parameter information, and first parts of parameter information of i$^{th}$ federated learning models of all of the plurality of subnodes are the same;

the plurality of subnodes comprise a first group of subnodes and a second group of subnodes, second parts of parameter information of i$^{th}$ federated learning models of all subnodes in the first group of subnodes are the same, and second parts of parameter information of i$^{th}$ federated learning models of all subnodes in the second group of subnodes are different and are different from the second parts of parameter information of the i$^{th}$ federated learning models of all the subnodes in the first group of subnodes; and
the sending an i$^{th}$ piece of second information comprises:

sending the first part of parameter information of the i$^{th}$ federated learning model to the plurality of subnodes in a broadcast or multicast manner;
sending the second part of parameter information of the i$^{th}$ federated learning model of each subnode in the first group of subnodes to the first group of subnodes in a broadcast or multicast manner; and
sending a second part of parameter information of an i$^{th}$ federated learning model of a p$^{th}$ subnode to the p$^{th}$ subnode in the second group of subnodes in a unicast manner, wherein p is any positive integer from 1 to P, and P is a quantity of subnodes comprised in the second group of subnodes.

8. The method according to any one of claims 1 to 6, further comprising:

sending, to the plurality of subnodes, information indicating a second model, wherein the information indicating the second model is used by each of the plurality of subnodes to determine a 1st local model.

9. The method according to any one of claims 1 to 7, wherein $1 \leq i \leq I$, I is a positive integer, an $I^{th}$ federated learning model of the $k^{th}$ subnode meets a model convergence condition, and when i is greater than 1, the $i^{th}$ local model of the $k^{th}$ subnode is determined based on the $(i-1)^{th}$ federated learning model of the $k^{th}$ subnode.

10. A communication method, comprising:

sending information indicating an $i^{th}$ local model of a $k^{th}$ subnode, wherein k is any positive integer from 1 to K, K is a quantity of a plurality of subnodes participating in federated learning, and i is a positive integer; and obtaining information indicating an $i^{th}$ federated learning model of the $k^{th}$ subnode, wherein the $i^{th}$ federated learning model of the $k^{th}$ subnode is determined based on an $i^{th}$ piece of first information and a type of the $i^{th}$ federated learning model of the $k^{th}$ subnode, wherein the $i^{th}$ piece of first information comprises information indicating an $i^{th}$ local model of each of the plurality of subnodes; and when i is greater than 1, the type of the $i^{th}$ federated learning model of the $k^{th}$ subnode is determined based on a type or performance of an $(i-1)^{th}$ federated learning model of the $k^{th}$ subnode.

11. The method according to claim 10, wherein the $i^{th}$ federated learning model of the $k^{th}$ subnode is the same as or different from an $i^{th}$ federated learning model of at least one subnode other than the $k^{th}$ subnode in the plurality of subnodes.

12. The method according to claim 10 or 11, further comprising:
sending a first test result, wherein the first test result indicates the performance of the $(i-1)^{th}$ federated learning model of the $k^{th}$ subnode, i is greater than 1, and the type of the $i^{th}$ federated learning model of the $k^{th}$ subnode is determined based on the first test result.

13. The method according to claim 10 or 11, further comprising:

obtaining information indicating a first model, wherein the first model is determined based on an $(i-1)^{th}$ piece of first information and a weight corresponding to an $(i-1)^{th}$ local model of each of the plurality of subnodes, and i is greater than 1; and sending a second test result, wherein the second test result indicates performance of the first model, or the second test result indicates performance of the first model and the performance of the $(i-1)^{th}$ federated learning model of the $k^{th}$ subnode, and the type of the $i^{th}$ federated learning model of the $k^{th}$ subnode is determined based on the second test result.

14. The method according to any one of claims 10 to 13, wherein when the type of the $i^{th}$ federated learning model of the $k^{th}$ subnode corresponds to a first value, the $i^{th}$ federated learning model of the $k^{th}$ subnode is determined based on the $i^{th}$ piece of first information and a weight corresponding to the $i^{th}$ local model of each of the plurality of subnodes; or when the type of the $i^{th}$ federated learning model of the $k^{th}$ subnode corresponds to a second value, the $i^{th}$ federated learning model of the $k^{th}$ subnode is determined based on the $i^{th}$ piece of first information and a similarity between the $i^{th}$ local model of the $k^{th}$ subnode and the $i^{th}$ local model of each of the plurality of subnodes.

15. The method according to any one of claims 10 to 14, further comprising:

obtaining information indicating a second model; and determining a 1st local model of the $k^{th}$ subnode based on the information indicating the second model.

16. The method according to any one of claims 10 to 15, wherein $1 \leq i \leq I$, I is a positive integer, an $I^{th}$ federated learning model of the $k^{th}$ subnode meets a model convergence condition, and when i is greater than 1, the $i^{th}$ local model of the $k^{th}$ subnode is determined based on the $(i-1)^{th}$ federated learning model of the $k^{th}$ subnode.

17. A communication apparatus, comprising a module or unit configured to implement the method according to any one of claims 1 to 9, or implement the method according to any one of claims 10 to 16.

18. A communication apparatus, comprising:

a processor, wherein the processor is coupled to a memory, and the processor is configured to execute program instructions in the memory, to perform the method according to any one of claims 1 to 9, or perform the method according to any one of claims 10 to 16.

19. A computer-readable storage medium, wherein the computer-readable storage medium stores instructions, and when the instructions are run on a computer, the computer is enabled to perform the method according to any one of claims 1 to 9 or perform the method according to any one of claims 10 to 16.

20. A computer program product, comprising instructions, wherein when the instructions are run on a computer, the computer is enabled to perform the method according to any one of claims 1 to 9 or perform the method according to any one of claims 10 to 16.

21. A communication system, comprising an apparatus configured to perform the method according to any one of claims 1 to 9 and/or an apparatus configured to perform the method according to any one of claims 10 to 16.

Terminal device 120

Terminal device 130

Access network
device 110

FIG. 1A

AI network
element 140

Access network
device 110

Terminal device 120

Terminal device 130

FIG. 1B

FIG. 2A

FIG. 2B

Central node

Subnode 1        Subnode 2        Subnode 3

**FIG. 3A**

AI model
management node

Central node

Subnode 1        Subnode 2        Subnode 3

**FIG. 3B**

Central node

$M_0$

$\alpha_1$  $\alpha_2$  $\alpha_3$

$M_1$  $M_2$  $M_3$

$M_1$  $M_0$  $M_2$  $M_0$  $M_3$  $M_0$

Data 1  Data 2  Data 3

Subnode 1  Subnode 2  Subnode 3

FIG. 4A

FIG. 4B

FIG. 5

Global layer   Personalized layer

**FIG. 6**

| Central node | | $k^{th}$ subnode |
|---|---|---|

S701: Obtain an $i^{th}$ piece of first information

S702: The central node obtains a first test result from the $k^{th}$ subnode

S703: Determine a type of an $i^{th}$ federated learning model of the $k^{th}$ subnode based on the first test result

S704: Determine the $i^{th}$ federated learning model of the $k^{th}$ subnode based on the $i^{th}$ piece of first information and the type of the $i^{th}$ federated learning model of the $k^{th}$ subnode

S705: $i^{th}$ piece of second information

**FIG. 7**

Start

A type of an $(i-1)^{th}$ federated learning
model corresponds to a first value

Test performance of the $(i-1)^{th}$ federated
learning model

Whether a loss
of the $(i-1)^{th}$ federated learning
model is greater than a loss
threshold

No

Yes

A type of an $i^{th}$ federated learning model
corresponds to a second value

A type of an $i^{th}$ federated learning model
corresponds to the first value

FIG. 8A

Start

A type of an $(i-1)^{th}$ federated learning
model corresponds to a second value

Test performance of the $(i-1)^{th}$ federated
learning model

Whether a
loss of the $(i-1)^{th}$ federated learning
model is greater than a loss
threshold

No

Yes

A type of an $i^{th}$ federated learning model
corresponds to a first value

A type of an $i^{th}$ federated learning model
corresponds to the second value

FIG. 8B

| Central node | | $k^{th}$ subnode |
|---|---|---|

S901: Obtain an $i^{th}$ piece of first information

S902: Parameter information of a first model →

← S903: The central node obtains a
second test result from the $k^{th}$ subnode

S904: Determine a type of an $i^{th}$ federated learning model
of the $k^{th}$ subnode based on the second test result

S905: Determine the $i^{th}$ federated learning model of the $k^{th}$ subnode
based on the $i^{th}$ piece of first information and the type of the $i^{th}$
federated learning model of the $k^{th}$ subnode

S906: $i^{th}$ piece of second information →

FIG. 9

FIG. 10A

Start

Calculate a loss of an $(i-1)^{th}$ federated learning model

Whether the loss of the $(i-1)^{th}$ federated learning model is greater than a loss threshold

No

Yes

Eighth indication information: a type of an $i^{th}$ federated learning model (first value)

Calculate a loss of a first model

Whether the loss of the $(i-1)^{th}$ federated learning model is greater than the loss of the first model

No

Yes

Fifth indication information: a type of an $i^{th}$ federated learning model (first value)

Sixth indication information: a type of an $i^{th}$ federated learning model (second value)

FIG. 10B

FIG. 11

FIG. 12

1300

Communication apparatus

1330

Communication
interface

1310

Processor

1340

1320

Memory

FIG. 13

## INTERNATIONAL SEARCH REPORT

| International application No. |
|---|
| **PCT/CN2022/142804** |

### A.  CLASSIFICATION OF SUBJECT MATTER

H04W 24/02(2009.01)i

According to International Patent Classification (IPC) or to both national classification and IPC

### B.  FIELDS SEARCHED

Minimum documentation searched (classification system followed by classification symbols)

IPC:H04W,H04Q,H04L

Documentation searched other than minimum documentation to the extent that such documents are included in the fields searched

Electronic data base consulted during the international search (name of data base and, where practicable, search terms used)

CNTXT, CNKI, CJFD, WPABS, ENTXT, IEEE, 3GPP: 联邦学习, 模型, 类型, 节点, 更新, 测试, federated learning, model, type, node, update, test, measure

### C.  DOCUMENTS CONSIDERED TO BE RELEVANT

| Category* | Citation of document, with indication, where appropriate, of the relevant passages | Relevant to claim No. |
|---|---|---|
| Y | CN 111898764 A (HUAWEI TECHNOLOGIES CO., LTD.) 06 November 2020 (2020-11-06) description, paragraphs 0074-0146 | 1-21 |
| Y | WO 2021218274 A1 (HUAWEI TECHNOLOGIES CO., LTD.) 04 November 2021 (2021-11-04) description, paragraphs 0016-0035 | 1-21 |
| A | CN 111310932 A (SHENZHEN QIANHAI WEBANK CO., LTD.) 19 June 2020 (2020-06-19) entire document | 1-21 |
| A | CN 112054863 A (HUAWEI TECHNOLOGIES CO., LTD.) 08 December 2020 (2020-12-08) entire document | 1-21 |
| A | CN 113723620 A (HITACHI LTD.) 30 November 2021 (2021-11-30) entire document | 1-21 |

☐ Further documents are listed in the continuation of Box C.      ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 March 2023** | **10 March 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/142804**

| Patent document cited in search report | | | Publication date (day/month/year) | Patent family member(s) | | | Publication date (day/month/year) |
|---|---|---|---|---|---|---|---|
| CN | 111898764 | A | 06 November 2020 | None | | | |
| WO | 2021218274 | A1 | 04 November 2021 | EP | 4132066 | A1 | 08 February 2023 |
| CN | 111310932 | A | 19 June 2020 | None | | | |
| CN | 112054863 | A | 08 December 2020 | None | | | |
| CN | 113723620 | A | 30 November 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111642343